# EUROPEAN PATENT SPECIFICATION

(11) **EP 2 863 469 B1**
(45) Date of publication and mention of the grant of the patent: **22.11.2017**
(21) Application number: 13804241.1
(22) Date of filing: 13.06.2013
(51) Int. Cl.: H01M 10/0569, H01M 4/485, H01M 10/0567, H01M 10/42, H01M 4/505, H01M 10/052

(54) **NONAQUEOUS ELECTROLYTE SECONDARY CELL AND METHOD FOR USING SAME**
SEKUNDÄRBATTERIE MIT NICHTWÄSSRIGEM ELEKTROLYTEN UND VERFAHREN ZUR VERWENDUNG DAVON
PILE SECONDAIRE À ÉLECTROLYTE NON AQUEUX ET SON PROCÉDÉ D'UTILISATION

(30) Priority: 15.06.2012 JP 2012136080
(43) Date of publication of application: 22.04.2015
(73) Proprietor: Mitsubishi Chemical Corporation, Tokyo 100-8251 (JP)
(72) Inventor: KAGIMOTO Junko, Inashiki-gun Ibaraki 300-0332 (JP); AOSHIMA Takayuki, Yokohama-shi Kanagawa 227-8502 (JP); TOKUDA Hiroyuki, Inashiki-gun Ibaraki 300-0332 (JP)
(74) Representative: Vossius & Partner Patentanwälte Rechtsanwälte mbB
(86) International application number: PCT/JP2013/066385
(87) International publication number: WO 2013/187487

(56) References cited:
- JP-A- 2004 022 336
- JP-A- 2008 091 327
- JP-A- 2008 130 528
- JP-A- 2009 110 799
- JP-A- 2010 080 188
- JP-A- 2012 199 172
- JP-A- 2013 152 824
- US-A1- 2011 311 866

## Description

### Technical Field

The present invention relates to a nonaqueous electrolytic solution secondary battery provided with a nonaqueous electrolytic solution, and to a method of using the nonaqueous electrolytic solution secondary battery.

### Background Art

Nonaqueous electrolytic solution secondary batteries such as lithium secondary batteries and the like are being put into practical use as broad-range power sources covering from power sources for so-called mobile electronic appliances such as portable telephones and notebook-size personal computers and others to in-vehicle power sources for driving for automobiles and others and large-scale stationary power sources, etc. However, with the recent development of technical advantages of electronic appliances and with the application thereof to in-vehicle power sources for driving for automobiles and to large-scale stationary power sources and the like, the requirements for the secondary batteries to be employed are being much higher and higher, and it is now desired to offer technical advantages of battery characteristics of secondary batteries, for example, to attain high-level improvement of capacity increase, high-temperature storage characteristics, cycle characteristics, etc.

As a negative electrode for use in nonaqueous electrolytic secondary batteries, widely employed is graphite or the like; but recently, a lithium titanium composite oxide capable of occluding and releasing lithium at a potential (about 1.55 V (vs. Li/Li⁺), which is nobler than that for graphite or the like, has become specifically noticed. In principle, a lithium titanium composite oxide does not provide lithium precipitation during charging, and does not provide crystal lattice expansion/contraction with charging/discharging, and is therefore excellent in high-rate cycle characteristics and has been proposed as a material excellent in safety (PTL 1).

On the other hand, in general, the nonaqueous electrolytic solution to be used in nonaqueous electrolytic solution secondary batteries mainly comprises an electrolyte and a nonaqueous solvent. As the main component of the nonaqueous solvent, there are used cyclic carbonates such as ethylene carbonate, propylene carbonate, etc.; linear carbonates such as dimethyl carbonate, diethyl carbonate, ethylmethyl carbonate, etc.; cyclic carboxylates such as γ-butyrolactone, γ-valerolactone, etc.

However, in long-term high-temperature storage, a nonaqueous electrolytic solution secondary battery using a lithium titanium composite oxide generates a larger amount of gas than a nonaqueous electrolytic solution secondary battery using graphite or the like. It is considered that such gas generation would be caused by the reaction between the nonaqueous electrolytic solution and the negative electrode in the battery, and for preventing gas generation, various proposals have been made (PTL 2, 3). For example, in PTL 3, incorporation of an acid anhydride in the nonaqueous electrolytic solution to reduce swelling is discussed.
Moreover, PTL 4 discloses lithium batteries including negative electrodes containing lithium titanate negative active materials.

### Citation List

### Patent Literature

PTL1: JP-A 2005-142047
PTL2: JP-A 2008-91327
PTL3: JP-A 2012-4121
PTL4: US 2011/311866 A1

### Summary of Invention

### Technical Problem

However, though various investigations for attaining the object of preventing gas generation have been made as above, it could not be said to be still sufficient for attaining satisfactory battery characteristics, and further improvements are desired.

It is an object of the present invention to provide a nonaqueous electrolytic solution secondary battery provided with a negative electrode active material capable of occluding and releasing lithium at a potential nobler than that for graphite or the like, which can prevent gas generation during high-temperature storage and which has good battery characteristics.

### Solution to Problem

The present inventors have assiduously studied for the purpose of solving the above-mentioned problems and, as a result, have found that, in a nonaqueous electrolytic solution secondary battery containing a negative electrode active material capable of occluding and releasing a lithium at a potential nobler than 1.0 V (vs. Li/Li⁺), when a specific compound is incorporated in the nonaqueous electrolytic solution for use in the nonaqueous electrolytic solution secondary battery, then a nonaqueous electrolytic solution secondary battery free from the problem of gas generation can be realized, and have completed the present invention.

Specifically, the gist of the present invention is described in the items below.
1. A nonaqueous electrolytic solution secondary battery comprising: a nonaqueous electrolytic solution that contains a lithium salt and a nonaqueous solvent to dissolve the lithium salt; a negative electrode capable of occluding and releasing a lithium ion; and a positive electrode, wherein:
   the negative electrode contains a negative electrode active material that occludes and releases a lithium ion at a potential nobler than 1.0 V, vs. Li/Li⁺, wherein the negative electrode active material is a lithium titanium composite oxide;
   characterized in that
   the nonaqueous solvent contains diethyl carbonate; and
   the nonaqueous electrolytic solution further contains an acid anhydride, wherein the content of the acid anhydride is 0.01% by mass to 0.9% by mass of the entire nonaqueous electrolytic solution, and wherein the acid anhydride is succinic anhydride.
2. The nonaqueous electrolytic solution secondary battery according to item 1, which comprises diethyl carbonate in an amount of from 5% by volume to 80% by volume relative to the nonaqueous solvent.
3. The nonaqueous electrolytic solution secondary battery according to item 1 or 2, wherein the nonaqueous solvent further contains at least one of a saturated cyclic carbonate and a cyclic sulfone compound.
4. The nonaqueous electrolytic solution secondary battery according to any one of items 1 to 3, wherein the content of the acid anhydride is 0.1% by mass to 0.9% by mass of the entire nonaqueous electrolytic solution.
5. The nonaqueous electrolytic solution secondary battery according to any one of items 1 to 4, wherein the content of the acid anhydride is 0.1% by mass to 0.8% by mass of the entire nonaqueous electrolytic solution.
6. The nonaqueous electrolytic solution secondary battery according to any one of items 3 to 5, wherein the saturated cyclic carbonate contains at least one of ethylene carbonate and propylene carbonate.
7. The nonaqueous electrolytic solution secondary battery according to any one of items 3 to 6, wherein the cyclic sulfone compound contains at least one of sulfolane and sulfolane derivatives.
8. The nonaqueous electrolytic solution secondary battery according to any one of items 1 to 7, wherein the positive electrode contains an active material containing Mn.
9. Use of the nonaqueous electrolytic solution secondary battery of any one of items 1 to 8, as a stationary battery.

### Advantageous Effects of Invention

According to the present invention, there is provided a nonaqueous electrolytic solution secondary battery as defined above, wherein gas generation is reduced.

### Description of Embodiments

Embodiments of the present invention are described below, to which, however, the invention is not limited. The present invention can be carried out in any desired modifications.

Here, "% by weight", "ppm by weight" and "part by weight" are the same as "% by mass", "ppm by mass" and "part by mass", respectively. Simple expression of "ppm" indicates "ppm by weight".

The nonaqueous electrolytic solution secondary battery of the present invention is favorable for use, for example, as a lithium secondary battery. The nonaqueous electrolytic solution secondary battery of the present invention may have any known configuration and typically comprises a negative electrode and a positive electrode capable of occluding and releasing an ion (for example, lithium ion), a nonaqueous electrolytic solution, and a separator.

### [I. Nonaqueous Electrolytic Solution]

The nonaqueous electrolytic solution for use in the nonaqueous electrolytic solution secondary battery of the present invention is a nonaqueous electrolytic solution containing a lithium salt and a nonaqueous solvent to dissolve the salt, in which the nonaqueous solvent contains diethyl carbonate, and the nonaqueous electrolytic solution further contains an acid anhydride.

### [1. Diethyl Carbonate]

Diethyl carbonate for use in the present invention is not specifically defined in point of the production method thereof, and can be produced according to any known method selected in any arbitrary manner.

Regarding the content of diethyl carbonate in 100% by volume of the nonaqueous solvent, the lower limit is generally 5% by volume or more, preferably 10% by volume or more, more preferably 30% by volume or more, and the upper limit is generally 80% by volume or less, preferably 70% by volume or less. Within the range, the gas generation preventing effect is easy to realize, and the durability improving effect for cycle characteristics and storage characteristics is easy to realize. In addition, the viscosity of the nonaqueous electrolytic solution can be controlled to fall within a suitable range, and the electric conductivity can be prevented from lowering. Consequently, in charging/discharging the nonaqueous electrolytic solution secondary battery at a high current density, it is easy to evade a trouble of charge-discharge capacity retention reduction.

For diethyl carbonate, it is also desirable to use two or more different types of symmetric linear carbonates and asymmetric carbonates except diethyl carbonate, as mentioned below.

### [2. Acid Anhydride]

The acid anhydride for use in the present invention is succinic anhydride. Further acid anhydrides disclosed herein include carboxylic acid
anhydrides, sulfonic acid anhydride, and anhydrides of carboxylic acid and sulfonic acid. Preferred are carboxylic acid anhydrides and sulfonic acid anhydrides.

Specific examples of carboxylic acid anhydrides include acetic anhydride, propionic anhydride, crotonic anhydride, trifluoroacetic anhydride pentafluoropropionic anhydride, succinic anhydride, glutaric anhydride, maleic anhydride, citraconic anhydride, glutaconic anhydride, itaconic anhydride, diglycolic anhydride, cyclohexanedicarboxylic acid anhydride, cyclopentane-tetracarboxylic acid dianhydride, 4-cyclohexene-1,2-dicarboxylic acid anhydride, 3,4,5,6-tetrahydrophthalic acid anhydride, 5-norbornene-2,3-dicarboxylic acid anhydride, phenylsuccinic acid anhydride, 2-phenylglutaric acid anhydride, phthalic anhydride, pyromellitic anhydride, fluorosuccinic anhydride, tetrafluorosuccinic anhydride, etc. Of those, preferred are succinic anhydride, glutaric anhydride, maleic anhydride, citraconic anhydride, itaconic anhydride, diglycolic anhydride, cyclohexanedicarboxylic acid anhydride, fluorosuccinic anhydride and tetrafluorosuccinic anhydride, from the viewpoint of the balance of charge-discharge efficiency improvement and gas generation preventing effect.

Specific examples of sulfonic acid anhydrides include methanesulfonic acid anhydride, ethanesulfonic acid anhydride, propanesulfonic acid anhydride, butenesulfonic acid anhydride, pentanesulfonic acid anhydride, hexanesulfonic acid anhydride, vinylsulfonic acid anhydride, benzenesulfonic acid anhydride, trifluoromethanesulfonic acid anhydride, 2,2,2-trifluoroethanesulfonic acid anhydride, pentafluoroethanesulfonic acid anhydride, 1,2-ethanedisulfonic acid anhydride, 3-propanedisulfonic acid anhydride, 4-butanedisulfonic acid anhydride, 2-benzenedisulfonic acid anhydride, tetrafluoro-1,2-ethanedisulfonic acid anhydride, hexafluoro-1,3-propanedisulfonic acid anhydride, Octafluoro-1,4-butanedisulfonic acid anhydride, 3-fluoro-1,2-benzenedisulfonic acid anhydride, 4-fluoro-1,2-benzenedisulfonic acid anhydride, 3,4,5,6-tetrafluoro-1,2-benzenedisulfonic acid anhydride, ethionic acid cyclic anhydride, etc. Of those, preferred are methanesulfonic acid anhydride, ethanesulfonic acid anhydride, propanesulfonic acid anhydride, butenesulfonic acid anhydride, vinylsulfonic acid anhydride, benzenesulfonic acid anhydride, trifluoromethanesulfonic acid anhydride, 2,2,2-trifluoroethanesulfonic acid anhydride, pentafluoroethanesulfonic acid anhydride, 1,2-ethanedisulfonic acid anhydride, 3-propanedisulfonic acid anhydride and 1,2-benzenedisulfonic acid anhydride, from the viewpoint of the balance of high-temperature storage characteristics improvement and gas generation preventing effect.

Specific examples of anhydrides of carboxylic acid and sulfonic acid include acetic acid methanesulfonic acid anhydride, acetic acid ethanesulfonic acid anhydride, acetic acid propanesulfonic acid anhydride, propionic acid methanesulfonic acid anhydride, propionic acid ethanesulfonic acid anhydride, propionic acid propanesulfonic acid anhydride, trifluoroacetic acid methanesulfonic acid anhydride, trifluoroacetic acid ethanesulfonic acid anhydride, trifluoroacetic acid propanesulfonic acid anhydride, acetic acid trifluoromethanesulfonic acid anhydride, acetic acid 2,2,2-trifluoroethanesulfonic acid anhydride, acetic acid pentafluoroethanesulfonic acid anhydride, trifluoroacetic acid trifluoromethanesulfonic acid anhydride, trifluoroacetic acid 2,2,2-trifluoroethanesulfonic acid anhydride, trifluoroacetic acid pentafluoroethanesulfonic acid anhydride, 3-sulfopropionic acid anhydride, 2-methyl-3-sulfopropionic acid anhydride, 2-dimethyl-3-sulfopropionic acid anhydride, 2-ethyl-3-sulfopropionic acid anhydride, 2,2-diethyl-3-sulfopropionic acid anhydride, 2-fluoro-3-sulfopropionic acid anhydride, 2,2-difluoro-3-sulfopropionic acid anhydride, 2,2,3,3-tetrafluoro-3-sulfopropionic acid anhydride, 2-sulfobenzoic acid anhydride, 3-fluoro-2-sulfobenzoic acid anhydride, 4-fluoro-2-sulfobenzoic acid anhydride, 5-fluoro-2-sulfobenzoic acid anhydride, 6-fluoro-2-sulfobenzoic acid anhydride, 3,6-difluoro-2-sulfobenzoic acid anhydride, 3,4,5,6-tetrafluoro-2-sulfobenzoic acid anhydride, 3-trifluoromethyl-2-sulfobenzoic acid anhydride, 4-trifluoromethyl-2-sulfobenzoic acid anhydride, 5-trifluoromethyl-2-sulfobenzoic acid anhydride, 6-trifluoromethyl-2-sulfobenzoic acid anhydride, etc.

Of those, preferred are acetic acid methanesulfonic acid anhydride, acetic acid ethanesulfonic acid anhydride, acetic acid propanesulfonic acid anhydride, propionic acid methanesulfonic acid anhydride, propionic acid ethanesulfonic acid anhydride, propionic acid propanesulfonic acid anhydride, trifluoroacetic acid methanesulfonic acid anhydride, trifluoroacetic acid ethanesulfonic acid anhydride, trifluoroacetic acid propanesulfonic acid anhydride, acetic acid trifluoromethanesulfonic acid anhydride, acetic acid 2,2,2-trifluoroethanesulfonic acid anhydride, acetic acid pentafluoroethanesulfonic acid anhydride, trifluoroacetic acid trifluoromethanesulfonic acid anhydride, trifluoroacetic acid 2,2,2-trifluoroethanesulfonic acid anhydride, trifluoroacetic acid pentafluoroethanesulfonic acid anhydride, 2-sulfobenzoic acid anhydride, 3-fluoro-2-sulfobenzoic acid anhydride, 4-fluoro-2-sulfobenzoic acid anhydride, 5-fluoro-2-sulfobenzoic acid anhydride, and 6-fluoro-2-sulfobenzoic acid anhydride, from the viewpoint of the balance of high-temperature storage characteristics improvement and gas generation preventing effect.

One alone or two or more types of acid anhydrides may be used here either singly or as combined in any desired manner and in any desired ratio.

The content of the acid anhydride in the electrolytic solution for use in the present invention is generally 0.01% by mass or more of the entire nonaqueous solvent, preferably 0.05% by mass or more, more preferably 0.1% by mass or more, and is generally
0.9% by mass or less, most preferably 0.8% by mass or less. When the additive amount falls within the above-mentioned range, the gas generation preventing effect could be sufficient, acid anhydride-derived gas generation can be prevented and the advantageous effects of the present invention can be sufficiently expressed.

A nonaqueous electrolytic solution secondary battery using, as the negative electrode therein, a metal oxide such as a lithium titanium composite oxide may generate a larger amount of gas in long-term high-temperature storage than a nonaqueous electrolytic solution secondary battery using graphite or the like. Though the details thereof are not as yet clarified, the reason of gas generation may be presumed as follows:
A metal oxide such as a lithium titanium composite oxide or the like contains a large amount of chemisorbed water or a surface OH group, and the chemisorbed water of the surface OH group reacts with the nonaqueous electrolytic solution in the battery to generate a decomposed gas.

Here, when an acid anhydride is added to the nonaqueous electrolytic solution, then it is presumed that the acid anhydride could react with the OH group on the surface of the metal oxide to thereby prevent the decomposed gas generation. In the present invention, when the acid anhydride is added excessively, then it may cause generation of a decomposed gas, and therefore in consideration of the amount of the OH group on the surface of the metal oxide such as lithium titanium composite oxide, the amount of the acid anhydride to be added is controlled to fall within the above-mentioned range, which may be more effective for prevention of decomposed gas generation.

### [3. Solvent]

As the nonaqueous solvent, herein usable, in addition to the above-mentioned diethyl carbonate, are saturated cyclic carbonates, cyclic sulfone compounds, fluorine atom-containing cyclic carbonates, symmetric linear carbonates except diethyl carbonate, asymmetric linear carbonates, cyclic or linear carboxylates, ether compounds, etc. Preferably, the solvent contains at least one of saturated cyclic carbonates and cyclic sulfone compounds.

### [3.1. Saturated Cyclic Carbonates]

As saturated cyclic carbonates, there are mentioned those having an alkylene group with from 2 to 4 carbon atoms.

Concretely, the saturated cyclic carbonates having from 2 to 4 carbon atoms include ethylene carbonate, propylene carbonate, butylene carbonate, etc. Preferred are ethylene carbonate and propylene carbonate.

One alone or two or more of saturated cyclic carbonates may be used here either singly or as combined in any desired manner and in any desired ratio.

Not specifically defined, the amount of the saturated cyclic carbonate to be added may be any desired one not markedly detracting from the advantageous effects of the present invention. In case where one alone of the compound is used, the lower limit of the amount thereof is at least 5% by volume in 100% by volume of the nonaqueous solvent, more preferably at least 10% by volume. The range may evade reduction in the electric conductivity to be derived from the reduction in the dielectric constant of the nonaqueous electrolytic solution, thereby readily bettering the large current discharge characteristics of nonaqueous electrolytic solution secondary batteries, the stability for negative electrodes and the cycle characteristics. The upper limit may be at most 95% by volume, more preferably at most 90% by volume, even more preferably at most 85% by volume. Falling within the range, the viscosity of the nonaqueous electrolytic solution may fall within a suitable range and the ionic conductivity thereof may be prevented from lowering and furthermore the load characteristics of nonaqueous electrolytic solution secondary batteries can be thereby readily made to fall within a good range.

Two or more different types of saturated cyclic carbonates may be used here as combined in any desired manner. One preferred combination is a combination of ethylene carbonate and propylene carbonate. In this case, the ratio by volume of ethylene carbonate and propylene carbonate is preferably from 1/99 to 60/40, more preferably from 5/95 to 50/50.

Further, when the amount of ethylene carbonate in the entire volume of the nonaqueous solvent is generally 40% by volume or less, preferably less than 30% by volume in 100% by volume of the nonaqueous solvent, then ethylene carbonate may be prevented from being decomposed, and gas generation in high-temperature storage may be reduced, and the embodiment is preferred. The embodiment is also preferred as providing the effect of improving the durability such as cycle characteristics, storage characteristics, etc.

### [3.2 Cyclic Sulfone Compounds]

Not specifically defined, the cyclic sulfone compounds may be any cyclic compounds in which the cyclic moiety comprises a methylene group and a sulfonyl group (-S(=O)₂-). The cyclic sulfone compounds may optionally have a substituent. Above all, preferred are those in which the cyclic moiety comprises 3 or more methylene groups and one or more sulfonyl groups, which optionally have a substituent and which have a molecular weight of 500 or less.

The number of the methylene groups in the cyclic moiety in the cyclic sulfone compound is preferably from 3 to 6, and the number of the sulfonyl groups therein is preferably 1 or 2.

The substituent includes a halogen atom, an alkyl group, and an alkyl group substituted with a halogen atom. The halogen atom includes a fluorine atom, a chlorine atom, a bromine atom and an iodine atom, and is preferably a fluorine atom or a chlorine atom, more preferably a fluorine atom. The alkyl group includes an alkyl group having from 1 to 4 carbon atoms, preferably having from 1 to 2 carbon atoms. The alkyl group substituted with a halogen atom includes an alkyl group having from 1 to 4 carbon atoms and substituted with a fluorine atom, a chlorine atom, a bromine atom or an iodine atom, preferably having from 1 to 2 carbon atoms. The compound may have one substituent or plural substituents, and from the advantageous effects of the present invention, the number of the substituents is from 1 to 3.

The cyclic sulfone compounds include trimethylene sulfones, tetramethylene sulfones and hexamethylene sulfones that are monosulfone compounds; trimethylene disulfones, tetramethylene disulfones and hexamethylene disulfones that are disulfone compounds, etc. Above all, more preferred are tetramethylene sulfones, tetramethylene disulfones, hexamethylene sulfones and hexamethylene disulfones, from the viewpoint of the dielectric constant and the viscosity thereof; and even more preferred are tetramethylene sulfones (sulfolanes).

As the cyclic sulfone compounds, preferred are sulfolane and/or sulfolane derivatives (hereinafter these may be abbreviated as "sulfolanes" including sulfolane) as readily providing the advantageous effects of the present invention. As the sulfolane derivatives, especially preferred are those in which at least one hydrogen atom bonding to the carbon atom that constitutes the sulfolane ring is substituted with a halogen atom. As the sulfolane derivatives, also usable here are those substituted with an alkyl group, in which at least one hydrogen atom bonding to the carbon atom that constitutes the alkyl group may be substituted with a halogen atom.

The halogen atom includes a fluorine atom, a chlorine atom, a bromine atom or an iodine atom. Of those, preferred is a fluorine atom or a chlorine atom, and more preferred is a fluorine atom. The cast may apply to any case of the substituent on the carbon atom constituting the sulfolane ring or the substituent of the alkyl group bonding to the sulfolane ring.

Sulfolane derivatives having an alkyl group as the substituent on the sulfolane ring include 2-methylsulfolane, 3-methylsulfolane, 2,2-dimethylsulfolane, 3,3-dimethylsulfolane, 2,3-dimethylsulfolane, 2,4-dimethylsulfolane, 2,5-dimethylsulfolane, 2,2,3-trimethylsulfolane, 2,2,4-trimethylsulfolane, 2,2,5-trimethylsulfolane, 2,3,3-trimethylsulfolane, 3,3,4-trimethylsulfolane, 3,3,5-trimethylsulfolane, 2,3,4-trimethylsulfolane, 2,3,5-trimethylsulfolane, 2,2,3,3-tetramethylsulfolane, 2,2,3,4-tetramethylsulfolane, 2,2,3,5-tetramethylsulfolane, 2,2,4,4-tetramethylsulfolane, 2,2,4,5-tetramethylsulfolane, 2,2,5,5-tetramethylsulfolane, 2,3,3,4-tetramethylsulfolane, 2,3,3,5-tetramethylsulfolane, 2,3,4,4-tetramethylsulfolane, 2,3,4,5-tetramethylsulfolane, 3,3,4,4-tetramethylsulfolane, 2,2,3,3,4-pentamethylsulfolane, 2,2,3,3,5-pentamethylsulfolane, 2,2,3,4,4-pentamethylsulfolane, 2,2,3,4,5-pentamethylsulfolane, 2,3,3,4,4-pentamethylsulfolane, 2,3,3,4,5-pentamethylsulfolane, 2,2,3,3,4,4-hexamethylsulfolane, 2,2,3,3,4,5-hexamethylsulfolane, 2,2,3,3,5,5-hexamethylsulfolane, 2,2,3,4,5,5-hexamethylsulfolane, 2,2,3,3,4,4,5-heptamethylsulfolane, 2,2,3,3,4,5,5-heptamethylsulfolane, octamethylsulfolane, etc.

Sulfolane derivatives having a fluorine atom as the substituent on the sulfolane ring include 2-fluorosulfolane, 3-fluorosulfolane, 2,2-difluorosulfolane, 2,3-difluorosulfolane, 2,4-difluorosulfolane, 2,5-difluorosulfolane, 2,4-difluorosulfolane, 2,2,3-trifluorosulfolane, 2,3,3-trifluorosulfolane, 2,2,4-trifluorosulfolane, 2,2,5-trifluorosulfolane, 2,3,4-trifluorosulfolane, 2,3,5-trifluorosulfolane, 2,4,4-trifluorosulfolane, 2,2,3,3-tetrafluorosulfolane, 2,2,3,4-tetrafluorosulfolane, 2,2,4,4-tetrafluorosulfolane, 2,2,5,5-tetrafluorosulfolane, 2,3,3,4-tetrafluorosulfolane, 2,3,3,5-tetrafluorosulfolane, 2,3,4,4-tetrafluorosulfolane, 2,3,4,5-tetrafluorosulfolane, 2,2,3,3,4-pentafluorosulfolane, 2,2,3,3,5-pentafluorosulfolane, 2,2,3,4,4-pentafluorosulfolane, 2,2,3,4,5-pentafluorosulfolane 2,3,3,4,4-pentafluorosulfolane, 2,3,3,4,5-pentafluorosulfolane, 2,2,3,3,4,4-hexafluorosulfolane, 2,2,3,3,4,5-hexafluorosulfolane, 2,2,3,3,5,5-hexafluorosulfolane, 2,2,3,4,5,5-hexafluorosulfolane, 2,2,3,3,4,4,5-heptafluorosulfolane, 2,2,3,3,4,5,5-heptafluorosulfolane, octafluorosulfolane, etc.

Sulfolane derivatives having an alkyl group and a fluorine atom as the substituents on the sulfolane ring include 2-fluoro-3-methylsulfolane, 2-fluoro-2-methylsulfolane, 3-fluoro-3-methylsulfolane, 3-fluoro-2-methylsulfolane, 4-fluoro-3-methylsulfolane, 4-fluoro-2-methylsulfolane, 5-fluoro-3-methylsulfolane, 5-fluoro-2-methylsulfolane, 2-fluoro-2,4-dimethylsulfolane, 4-fluoro-2,4-dimethylsulfolane, 5-fluoro-2,4-dimethylsulfolane, 2,2-difluoro-3-methylsulfolane, 2,3-difluoro-3-methylsulfolane, 2,4-difluoro-3-methylsulfolane, 2,5-difluoro-3-methylsulfolane, 3,4-difluoro-3-methylsulfolane, 3,5-difluoro-3-methylsulfolane, 4,4-difluoro-3-methylsulfolane, 4,5-difluoro-3-methylsulfolane, 5,5-difluoro-3-methylsulfolane, 2,2,3-trifluoro-3-methylsulfolane, 2,2,4-trifluoro-3-methylsulfolane, 2,2,5-trifluoro-3-methylsulfolane, 2,3,4-trifluoro-3-methylsulfolane, 2,3,5-trifluoro-3-methylsulfolane, 2,4,4-trifluoro-3-methylsulfolane, 2,4,5-trifluoro-3-methylsulfolane, 2,5,5-trifluoro-3-methylsulfolane, 3,4,4-trifluoro-3-methylsulfolane, 3,4,5-trifluoro-3-methylsulfolane, 4,4,5-trifluoro-3-methylsulfolane, 4,5,5-trifluoro-3-methylsulfolane, 2,2,3,4-tetrafluoro-3-methylsulfolane, 2,2,3,5-tetrafluoro-3-methylsulfolane, 2,2,4,4-tetrafluoro-3-methylsulfolane, 2,2,4,5-tetrafluoro-3-methylsulfolane, 2,2,5,5-tetrafluoro-3-methylsulfolane, 2,3,4,4-tetrafluoro-3-methylsulfolane, 2,3,4,5-tetrafluoro-3-methylsulfolane, 2,3,5,5-tetrafluoro-3-methylsulfolane, 3,4,4,5-tetrafluoro-3-methylsulfolane, 3,4,5,5-tetrafluoro-3-methylsulfolane, 4,4,5,5-tetrafluoro-3-methylsulfolane, 2,2,3,4,4-pentafluoro-3-methylsulfolane, 2,2,3,4,5-pentafluoro-3-methylsulfolane, 2,2,3,5,5-pentafluoro-3-methylsulfolane, 2,3,4,4,5-pentafluoro-3-methylsulfolane, 2,3,4,5,5-pentafluoro-3-methylsulfolane, 2,2,3,4,4,5-hexafluoro-3-methylsulfolane, 2,2,3,4,5,5-hexafluoro-3-methylsulfolane, 2,3,4,4,5,5-hexafluoro-3-methylsulfolane, heptafluoro-3-methylsulfolane, etc.

Sulfolane derivatives having a monofluoroalkyl group and a fluorine atom as the substituents on the sulfolane ring include 2-fluoromethylsulfolane, 3-fluoromethylsulfolane, 2-fluoro-3-(fluoromethyl)sulfolane, 3-fluoro-3-(fluoromethyl)sulfolane, 4-fluoro-3-(fluoromethyl)sulfolane, 5-fluoro-3-(fluoromethyl)sulfolane, 2,2-difluoro-3-(fluoromethyl)sulfolane, 2,3-difluoro-3-(fluoromethyl)sulfolane, 2,4-difluoro-3-(fluoromethyl)sulfolane, 2,5-difluoro-3-(fluoromethyl)sulfolane, 3,4-difluoro-3-(fluoromethyl)sulfolane, 3,5-difluoro-3-(fluoromethyl)sulfolane, 4,4-difluoro-3-(fluoromethyl)sulfolane, 4,5-difluoro-3-(fluoromethyl)sulfolane, 5,5-difluoro-3-(fluoromethyl)sulfolane, 2,2,3-trifluoro-3-(fluoromethyl)sulfolane, 2,2,4-trifluoro-3-(fluoromethyl)sulfolane, 2,2,5-trifluoro-3-(fluoromethyl)sulfolane, 2,3,4-trifluoro-3 -(fluoromethyl)sulfolane, 2,3,5-trifluoro-3 -(fluoromethyl)sulfolane, 2,4,4-trifluoro-3-(fluoromethyl)sulfolane, 2,4,5-trifluoro-3-(fluoromethyl)sulfolane, 2,5,5-trifluoro-3-(fluoromethyl)sulfolane, 3,4,4-trifluoro-3-(fluoromethyl)sulfolane, 3,4,5-trifluoro-3-(fluoromethyl)sulfolane, 4,4,5-trifluoro-3-(fluoromethyl)sulfolane, 4,5,5-trifluoro-3-(fluoromethyl)sulfolane, 2,2,3,4-tetrafluoro-3-(fluoromethyl)sulfolane, 2,2,3, 5-tetrafluoro-3-(fluoromethyl)sulfolane, 2,2,4,4-tetrafluoro-3-(fluoromethyl)sulfolane, 2,2,4,5-tetrafluoro-3-(fluoromethyl)sulfolane, 2,2,5,5-tetrafluoro-3-(fluoromethyl)sulfolane, 2,3,4,4-tetrafluoro-3-(fluoromethyl)sulfolane, 2,3,4,5-tetrafluoro-3-(fluoromethyl)sulfolane, 2,3,5,5-tetrafluoro-3-(fluoromethyl)sulfolane, 3,4,4,5-tetrafluoro-3-(fluoromethyl)sulfolane, 3,4,5,5-tetrafluoro-3-(fluoromethyl)sulfolane, 4,4,5,5-tetrafluoro-3-(fluoromethyl)sulfolane, 2,2,3,4,4-pentafluoro-3-(fluoromethyl)sulfolane, 2,2,3,4,5-pentafluoro-3-(fluoromethyl)sulfolane, 2,2,3,5,5-pentafluoro-3-(fluoromethyl)sulfolane, 2,3,4,4,5-pentafluoro-3-(fluoromethyl)sulfolane, 2,3,4,5,5-pentafluoro-3-(fluoromethyl)sulfolane, 2,2,3,4,4,5-hexafluoro-3-(fluoromethyl)sulfolane, 2,2,3,4,5,5-hexafluoro-3-(fluoromethyl)sulfolane, 2,3,4,4,5,5-hexafluoro-3-(fluoromethyl)sulfolane, heptafluoro-3-(fluoromethyl)sulfolane, etc.

Sulfolane derivatives having a difluoroalkyl substituent and a fluorine atom as the substituents on the sulfolane ring include 2-difluoromethylsulfolane, 3-difluoromethylsulfolane, 2-fluoro-3-(difluoromethyl)sulfolane, 3-fluoro-3-(difluoromethyl)sulfolane, 4-fluoro-3-(difluoromethyl)sulfolane, 5-fluoro-3-(difluoromethyl)sulfolane, 2,2-difluoro-3-(difluoromethyl)sulfolane, 2,3-difluoro-3-(difluoromethyl)sulfolane, 2,4-difluoro-3-(difluoromethyl)sulfolane, 2,5-difluoro-3-(difluoromethyl)sulfolane, 3,4-difluoro-3-(difluoromethyl)sulfolane, 3,5-difluoro-3-(difluoromethyl)sulfolane, 4,4-difluoro-3-(difluoromethyl)sulfolane, 4,5-difluoro-3-(difluoromethyl)sulfolane, 5,5-difluoro-3-(difluoromethyl)sulfolane, 2,2,3-trifluoro-3-(difluoromethyl)sulfolane, 2,2,4-trifluoro-3-(difluoromethyl)sulfolane, 2,2,5-trifluoro-3-(difluoromethyl)sulfolane, 2,3,4-trifluoro-3-(difluoromethyl)sulfolane, 2,3,5-trifluoro-3-(difluoromethyl)sulfolane, 2,4,4-trifluoro-3-(difluoromethyl)sulfolane, 2,4,5-trifluoro-3-(difluoromethyl)sulfolane, 2,5,5-trifluoro-3-(difluoromethyl)sulfolane, 3,4,4-trifluoro-3-(difluoromethyl)sulfolane, 3,4,5-trifluoro-3-(difluoromethyl)sulfolane, 4,4,5-trifluoro-3-(fluoromethyl)sulfolane, 4,5,5-trifluoro-3-(difluoromethyl)sulfolane, 2,2,3,4-tetrafluoro-3-(difluoromethyl)sulfolane, 2,2,3,5-tetrafluoro-3-(difluoromethyl)sulfolane, 2,2,4,4-tetrafluoro-3-(difluoromethyl)sulfolane, 2,2,4,5-tetrafluoro-3-(difluoromethyl)sulfolane, 2,2,5,5-tetrafluoro-3-(difluoromethyl)sulfolane, 2,3,4,4-tetrafluoro-3-(difluoromethyl)sulfolane, 2,3,4,5-tetrafluoro-3-(difluoromethyl)sulfolane, 2,3 ,5,5-tetrafluoro-3-(difluoromethyl)sulfolane, 3,4,4,5-tetrafluoro-3-(difluoromethyl)sulfolane, 3,4,5,5-tetrafluoro-3-(difluoromethyl)sulfolane, 4,4,5,5-tetrafluoro-3-(difluoromethyl)sulfolane, 2,2,3,4,4-pentafluoro-3-(difluoromethyl)sulfolane, 2,2,3,4,5-pentafluoro-3-(difluoromethyl)sulfolane, 2,2,3,5,5-pentafluoro-3-(difluoromethyl)sulfolane, 2,3,4,4,5-pentafluoro-3-(difluoromethyl)sulfolane, 2,3,4,5,5-pentafluoro-3-(difluoromethyl)sulfolane, 2,2,3,4,4,5-hexafluoro-3-(difluoromethyl)sulfolane, 2,2,3,4,5,5-hexafluoro-3-(difluoromethyl)sulfolane, 2,3,4,4,5,5-hexafluoro-3-(difluoromethyl)sulfolane, heptafluoro-3-(difluoromethyl)sulfolane, etc.

Sulfolane derivatives having a trifluoroalkyl substituent and a fluorine atom as the substituents on the sulfolane ring include 2-trifluoromethylsulfolane, 3-trifluoromethylsulfolane, 2-fluoro-3-(trifluoromethyl)sulfolane, 3-fluoro-3-(trifluoromethyl)sulfolane, 4-fluoro-3-(trifluoromethyl)sulfolane, 5-fluoro-3-(trifluoromethyl)sulfolane, 2,2-difluoro-3-(trifluoromethyl)sulfolane, 2,3-difluoro-3-(trifluoromethyl)sulfolane, 2,4-difluoro-3-(trifluoromethyl)sulfolane, 2,5-difluoro-3-(trifluoromethyl)sulfolane, 3,4-difluoro-3-(trifluoromethyl)sulfolane, 3,5-difluoro-3-(trifluoromethyl)sulfolane, 4,4-difluoro-3-(trifluoromethyl)sulfolane, 4,5-difluoro-3-(trifluoromethyl)sulfolane, 5,5-difluoro-3-(trifluoromethyl)sulfolane, 2,2,3-trifluoro-3-(trifluoromethyl)sulfolane, 2,2,4-trifluoro-3-(trifluoromethyl)sulfolane, 2,2,5-trifluoro-3-(trifluoromethyl)sulfolane, 2,3,4-trifluoro-3-(trifluoromethyl)sulfolane, 2,3,5-trifluoro-3-(trifluoromethyl)sulfolane, 2,4,4-trifluoro-3-(trifluoromethyl)sulfolane, 2,4,5-trifluoro-3-(trifluoromethyl)sulfolane, 2,5,5-trifluoro-3-(trifluoromethyl)sulfolane, 3,4,4-trifluoro-3-(trifluoromethyl)sulfolane, 3,4,5-trifluoro-3-(trifluoromethyl)sulfolane, 4,4,5-trifluoro-3-(fluoromethyl)sulfolane, 4,5,5-trifluoro-3-(trifluoromethyl)sulfolane, 2,2,3,4-tetrafluoro-3-(trifluoromethyl)sulfolane, 2,2,3,5-tetrafluoro-3-(trifluoromethyl)sulfolane, 2,2,4,4-tetrafluoro-3-(trifluoromethyl)sulfolane, 2,2,4,5-tetrafluoro-3-(trifluoromethyl)sulfolane, 2,2,5,5-tetrafluoro-3-(trifluoromethyl)sulfolane, 2,3,4,4-tetrafluoro-3-(trifluoromethyl)sulfolane, 2,3,4,5-tetrafluoro-3-(trifluoromethyl)sulfolane, 2,3,5,5-tetrafluoro-3-(trifluoromethyl)sulfolane, 3,4,4,5-tetrafluoro-3-(trifluoromethyl)sulfolane, 3,4,5,5-tetrafluoro-3-(trifluoromethyl)sulfolane, 4,4,5,5-tetrafluoro-3-(trifluoromethyl)sulfolane, 2,2,3,4,4-pentafluoro-3-(trifluoromethyl)sulfolane, 2,2,3,4,5-pentafluoro-3-(trifluoromethyl)sulfolane, 2,2,3,5,5-pentafluoro-3-(trifluoromethyl)sulfolane, 2,3,4,4,5-pentafluoro-3-(trifluoromethyl)sulfolane, 2,3,4,5,5-pentafluoro-3-(trifluoromethyl)sulfolane, 2,2,3,4,4,5-hexafluoro-3-(trifluoromethyl)sulfolane, 2,2,3,4,5,5-hexafluoro-3-(trifluoromethyl)sulfolane, 2,3,4,4,5,5-hexafluoro-3-(trifluoromethyl)sulfolane, heptafluoro-3-(trifluoromethyl)sulfolane, etc.

Of the above-mentioned sulfolanes, more preferred are sulfolane, 2-methylsulfolane, 3-methylsulfolane, 2,2-dimethylsulfolane, 3,3-dimethylsulfolane, 2,3-dimethylsulfolane, 2,4-dimethylsulfolane, 2,5-dimethylsulfolane, 2-fluorosulfolane, 3-fluorosulfolane, 2-fluoro-3-methylsulfolane, 3-fluoro-3-methylsulfolane, 4-fluoro-3-methylsulfolane, 5-fluoro-3-methylsulfolane, 2-fluoro-2-methylsulfolane, 3-fluoro-2-methylsulfolane, 4-fluoro-2-methylsulfolane, 5-fluoro-2-methylsulfolane, 2-fluoro-2,4-dimethylsulfolane, 3-fluoro-2,4-dimethylsulfolane, 4-fluoro-2,4-dimethylsulfolane, 5-fluoro-2,4-dimethylsulfolane, 2-fluoromethylsulfolane, 3-fluoromethylsulfolane, 2-difluoromethylsulfolane, 3-difluoromethylsulfolane, 2-trifluoromethylsulfolane, and 3 -trifluoromethylsulfolane.

Even more preferred are sulfolane, 2-methylsulfolane, 3-methylsulfolane, 2-fluorosulfolane, 3-fluorosulfolane, 2-fluoro-3-methylsulfolane, 3-fluoro-3-methylsulfolane, 4-fluoro-3-methylsulfolane, 5-fluoro-3-methylsulfolane, 2-fluoromethylsulfolane, 3-fluoromethylsulfolane, 2-difluoromethylsulfolane, 3-difluoromethylsulfolane, 2-trifluoromethylsulfolane, and 3-trifluoromethylsulfolane.

The number of the substituents on the sulfolane ring is preferably 3 or less, from the viewpoint of the viscosity and the electric conductivity in the case of using a substituted cyclic sulfone compound. When a fluorinated cyclic sulfone compound is used, the number of the fluorine atoms therein is preferably 8 or less, from the viewpoint of the chemical stability and the solubility thereof with any other solvent in use as nonaqueous electrolytic solution secondary batteries.

One alone or two or more types of cyclic sulfone compounds may be contained in the nonaqueous electrolytic solution in the present invention in any desired combination manner and in any desired ratio.

The production method is not also specifically defined, and any known method may be selected in any desired manner for production of the compounds.

The content of the cyclic sulfone compound is preferably from 0.01% by volume to 90% by volume in 100% by volume of the nonaqueous solvent. Falling within the range, the gas generation preventing effect can be readily realized and the effect of improving durability for cycle characteristics and storage characteristics can also be readily realized, and in addition, the viscosity of the nonaqueous electrolytic solution can be controlled to fall within a suitable range, and the electric conductivity can be prevented from lowering, and consequently, in charging and discharging at a high current density of nonaqueous electrolytic solution secondary batteries, it is possible to evade a trouble of charge-discharge capacity retention rate reduction.

Also preferably, the sulfone compound is used here along with a cyclic carbonate. In this case, the ratio by volume of the cyclic carbonate and the sulfone compound is preferably from 1/99 to 60/40, more preferably from 5/95 to 50/50. When the electrolytic solution contains a sulfone compound in the ratio falling within the range, then the cyclic carbonate can be prevented from decomposing and therefore the amount of the decomposed gas can be reduced.

### [3.3 Fluorine Atom-Having Cyclic Carbonate]

The fluorine atom-having cyclic carbonate for use herein (this may be hereinafter abbreviated as "fluorinated cyclic carbonate") is not specifically defined, and may be any cyclic carbonate having a fluorine atom.

The fluorinated cyclic carbonate includes cyclic carbonate derivatives having an alkylene group with from 2 to 6 carbon atoms, for example, ethylene carbonate derivatives. The ethylene carbonate derivatives include, for example, ethylene carbonate fluorides and ethylene carbonate fluorides substituted with an alkyl group (e.g., alkyl group having from 1 to 4 carbon atoms).

Concretely, there are mentioned monofluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethylethylene carbonate, 4,5-difluoro-4,5-dimethylethylene carbonate, 4,4-difluoro-5,5-dimethylethylene carbonate, etc.

Above all, preferred is at least one selected from a group consisting of monofluoroethylene carbonate, 4,4-difluoroethylene carbonate, 4,5-difluoroethylene carbonate and 4,5-difluoro-4,5-dimethylethylene carbonate, as imparting high ionic conductivity and capable of suitably forming an interface protective film.

One alone or two or more types of fluorinated cyclic carbonates may be used here either singly or as combined in any desired manner and in any desired ratio. This may also be combined with any of the above-mentioned saturated cyclic carbonates and cyclic sulfone compounds in any desired manner and in any desired ratio.

The content of the fluorinated cyclic carbonate to be used here is not specifically defined, and may be any desired one so far as the compound does not significantly detract from the advantageous effects of the present invention. Preferably, the content is 0.01% by volume or more in 100% by volume of the nonaqueous solvent, more preferably 0.1% by volume or more, even more preferably 0.2% by volume or more, and is preferably 95% by volume or less, more preferably 90% by volume or less. Falling within the range, it is easy for nonaqueous electrolytic solution secondary batteries to fully express the effect of improving cycle characteristics and it is easy to evade a problem of high-temperature storage characteristics degradation and a problem of discharge capacity retention rate reduction owing to increase in gas generation.

In addition, the fluorine atom-having cyclic carbonate can express the effective function not only as the solvent but also as the auxiliary agent mentioned below. The amount of the fluorine atom-having cyclic carbonate that serves as a solvent and also as an auxiliary agent is not specifically defined, and the amount thereof described in the previous paragraph is also employable here directly as it is.

### [3.4 Symmetric Linear Carbonates except diethyl carbonate]

As the symmetric linear carbonates except diethyl carbonate for use in the present invention (hereinafter these may be simply abbreviated as "symmetric linear carbonates"), there are mentioned symmetric linear carbonates having from 3 to 7 carbon atoms and those having a fluorine atom.

The symmetric linear carbonates in the present invention are linear carbonates in which the two substituents bonding to the carbonate group are the same. For example, the symmetric linear carbonates having from 3 to 7 carbon atoms include dimethyl carbonate, di-n-propyl carbonate, di-i-propyl carbonate, etc. Above all, preferred is dimethyl carbonate.

The number of the fluorine atoms that the symmetric linear carbonate having a fluorine atom (hereinafter these may be abbreviated as "fluorinated symmetric linear carbonates") have is not specifically defined so far as the number is 2 or more, but is generally 6 or less, preferably 4 or less. When the fluorinated linear carbonate has plural fluorine atoms, the atoms may bond to the same carbon atom or may bond to different carbon atoms. The fluorinated symmetric linear carbonates include fluorinated dimethyl carbonate derivatives, fluorinated diethyl carbonate derivatives, etc.

The fluorinated dimethyl carbonate derivatives include difluoromethylmethyl carbonate, bis(fluoromethyl) carbonate, bis(difluoromethyl) carbonate, bis(trifluoromethyl)carbonate, etc.

The fluorinated diethyl carbonate derivatives include bis(2-fluoroethyl) carbonate, bis(2,2-difluoroethyl) carbonate, bis(2,2,2-trifluoroethyl) carbonate, etc.

The nonaqueous electrolytic solution in the present invention may contain one alone or two or more types of symmetric linear carbonates either singly or as combined in any desired manner and in any desired ratio.

The production method is not specifically defined, and any known method may be freely selected for producing the compounds.

Regarding the content of the symmetric linear carbonate, the lower limit is generally 5% by volume or more in 100% by volume of the nonaqueous solvent, preferably 10% by volume or more, more preferably 30% by volume or more, and the upper limit is generally 80% by volume or less, preferably 70% by volume or less. Falling within the range, the gas generation preventing effect is easy to realize and the effect of improving durability of cycle characteristics and storage characteristics is also easy to realize. In addition, the viscosity of the nonaqueous electrolytic solution can be controlled to fall within a suitable range and the electric conductivity can be prevented from lowering. Consequently, when the nonaqueous electrolytic solution secondary batteries are charged/discharged at a high current density, it is easy to evade the trouble of charge-discharge capacity retention reduction.

Also preferably, two or more types of a specific symmetric linear carbonate and an asymmetric carbonate to be mentioned below are combined for use herein.

### [3.5 Asymmetric Linear Carbonates]

As asymmetric linear carbonates for use herein, preferred are those having from 3 to 7 carbon atoms.

Concretely, the asymmetric linear carbonates having from 3 to 7 carbon atoms include n-propyl-i-propyl carbonate, ethylmethyl carbonate, methyl-n-propyl carbonate, n-butylmethyl carbonate, i-butylmethyl carbonate, t-butylmethyl carbonate, ethyl-n-propyl carbonate, n-butylethyl carbonate, i-butylethyl carbonate, t-butylethyl carbonate, etc.

Above all, preferred are n-propyl-i-propyl carbonate, ethylmethyl carbonate, and methyl-n-propyl carbonate; and more preferred is ethylmethyl carbonate.

In addition, asymmetric linear carbonates having a fluorine atom (hereinafter these may be abbreviated as "fluorinated asymmetric linear carbonates") are also preferably used here. The number of the fluorine atoms that the fluorinated asymmetric linear carbonate has is not specifically defined so far as the number is 1 or more, and is generally 6 or less, preferably 4 or less. In case where the fluorinated asymmetric linear carbonate has plural fluorine atoms, the atoms may bond to the same carbon atoms or may bond to different carbon atoms. The fluorinated asymmetric linear carbonates include fluorinated dimethyl carbonate derivatives, fluorinated ethylmethyl carbonate derivatives, fluorinated diethyl carbonate derivatives, etc.

The fluorinated dimethyl carbonate derivatives include fluoromethylmethyl carbonate, difluoromethylmethyl carbonate, trifluoromethylmethyl carbonate, etc.

The fluorinated ethylmethyl carbonate derivatives include (2-fluoroethyl)methyl carbonate, ethylfluoromethyl carbonate, (2,2-difluoroethyl)methyl carbonate, (2-fluoroethyl)fluoromethyl carbonate, ethyldifluoromethyl carbonate, (2,2,2-trifluoroethyl)methyl carbonate, (2,2-difluoroethyl)fluoromethyl carbonate, (2-fluoroethyl)difluoromethyl carbonate, ethyltrifluoromethyl carbonate, etc.

The fluorinated diethyl carbonate derivatives include ethyl-(2-fluoroethyl) carbonate, ethyl-(2,2-difluoroethyl) carbonate, ethyl-(2,2,2-trifluoroethyl) carbonate, 2,2-difluoroethyl-2'-fluoroethyl carbonate, 2,2,2-trifluoroethyl-2'-fluoroethyl carbonate, 2,2,2-trifluoroethyl-2',2'-difluoroethyl carbonate, etc.

One alone or two or more types of asymmetric linear carbonates may be used here either singly or as combined in any desired manner and in any desired ratio.

The content of the asymmetric linear carbonate is preferably 5% by volume or more in 100% by volume of the nonaqueous solvent, more preferably 10% by volume or more, even more preferably 15% by volume or more. Thus defining the lower limit makes it possible to control the viscosity of the nonaqueous electrolytic solution to fall within a suitable range and to prevent the ionic conductivity from lowering and therefore makes it possible to readily control the large-current discharge characteristics of nonaqueous electrolytic solution secondary batteries to fall within a preferred range. Also preferably, the content of the asymmetric linear carbonate is 90% by volume or less in 100% by volume of the nonaqueous solvent, more preferably 85% by volume or less. Thus defining the upper limit makes it possible to prevent the electric conductivity from lowering owing to the reduction in the dielectric constant of the nonaqueous electrolytic solution, and makes it possible to readily control the large-current discharge characteristics of nonaqueous electrolytic solution secondary batteries to fall within a preferred range.

Combined use of two or more types of a specific asymmetric linear carbonate and a specific symmetric carbonate is preferred, as the case may be. For example, in case where a specific asymmetric linear carbonate is combined with ethylmethyl carbonate, or a specific symmetric linear carbonate is combined with diethyl carbonate for use herein, it is especially desirable that the content of the cyclic carbonate and/or the cyclic sulfone compound is 10% by volume or more and 30% by volume or less, the content of diethyl carbonate is 10% by volume or more and 70% by volume or less, and the content of ethylmethyl carbonate is 10% by volume or more and 80% by volume or less. Selecting the content range makes it possible to increase the ionic conductivity while the cold precipitation temperature of electrolyte is lowered and while the viscosity of the nonaqueous electrolytic solution is lowered, and therefore a high output can be realized even at low temperatures.

### [3.6 Cyclic or Linear Carboxylates]

The cyclic carboxylates include those of such that the total carbon number in the structural formula thereof is from 3 to 12.

Concretely, there are mentioned γ-butyrolactone, γ-valerolactone, γ-caprolactone, ε-caprolactone, etc. Above all, in case where the nonaqueous electrolytic solution secondary battery is a lithium ion secondary battery, especially preferred is γ-butyrolactone from the viewpoint of improving the battery characteristics derived from the increase in the lithium ion dissociation degree.

The content of the cyclic carboxylate is, in general, preferably 5% by volume or more in 100% by volume of the nonaqueous solvent, more preferably 10% by volume or more. Thus defining the lower limit makes it possible to increase the electric conductivity of the nonaqueous electrolytic solution and therefore makes it possible to readily improve the large-current discharge characteristics of nonaqueous electrolytic solution secondary batteries. In addition, the content of the cyclic carboxylate is preferably 50% by volume or less in 100% by volume of the nonaqueous solvent, more preferably 40% by volume or less. Thus defining the upper limit makes it possible to control the viscosity of the nonaqueous electrolytic solution to fall within a suitable range, to evade the electric conductivity thereof from lowering and to prevent the negative electrode resistance from increasing, and therefore makes it possible to readily control the large-current discharge characteristics of nonaqueous electrolytic solution secondary batteries to fall within a preferred range.

The linear carboxylates include those of such that the total carbon number in the structural formula thereof is from 3 to 7.

Concretely, there are mentioned methyl acetate, ethyl acetate, n-propyl acetate, isopropyl acetate, n-butyl acetate, isobutyl acetate, t-butyl acetate, methyl propionate, ethyl propionate, n-propyl propionate, isopropyl propionate, n-butyl propionate, isobutyl propionate, t-butyl propionate, methyl butyrate, ethyl butyrate, n-propyl butyrate, isopropyl butyrate, methyl isobutyrate, ethyl isobutyrate, n-propyl isobutyrate, isopropyl isobutyrate, etc.

Above all, preferred are methyl acetate, ethyl acetate, n-propyl acetate, n-butyl acetate, methyl propionate, ethyl propionate, n-propyl propionate, isopropyl propionate, methyl butyrate, ethyl butyrate, etc., from the viewpoint of increasing the ionic conductivity through viscosity reduction.

The content of the linear carboxylate is, in general, preferably 10% by volume or more in 100% by volume of the nonaqueous solvent, more preferably 15% by volume or more. Thus defining the lower limit makes it possible to increase the electric conductivity of the nonaqueous electrolytic solution and therefore makes it possible to readily improve the large-current discharge characteristics of nonaqueous electrolytic solution secondary batteries. The content of the linear carboxylate is preferably 80% by volume or less in 100% by volume of the nonaqueous solvent, more preferably 70% by volume or less. Thus defining the upper limit makes it possible to prevent the negative electrode resistance from increasing and therefore makes it possible to readily control the large-current discharge characteristics of nonaqueous electrolytic solution secondary batteries and the cycle characteristics thereof to fall within a preferred range.

### [3.7 Ether Compounds]

As the ether compounds, preferred are linear ethers having from 3 to 10 carbon atoms or cyclic ethers having from 3 to 6 carbon atoms, in which a part of the hydrogen atoms may be optionally substituted with a fluorine atom.

The linear ethers having from 3 to 10 carbon atoms include diethyl ether, bis(2-fluoroethyl) ether, bis(2,2-difluoroethyl) ether, bis(2,2,2-trifluoroethyl) ether, ethyl (2-fluoroethyl) ether, ethyl (2,2,2-trifluoroethyl) ether, ethyl (1,1,2,2-tetrafluoroethyl) ether, (2-fluoroethyl) (2,2,2-trifluoroethyl) ether, (2-fluoroethyl) (1,1,2,2-tetrafluoroethyl) ether, (1,1,2,2-tetrafluoroethyl) (2,2,2-trifluoroethyl) ether, ethyl n-propyl ether, ethyl (3-fluoro-n-propyl) ether, ethyl (3,3,3-trifluoro-n-propyl) ether, ethyl (2,2,3,3-tetrafluoro-n-propyl) ether, ethyl (2,2,3,3,3-pentafluoro-n-propyl) ether, 2-fluoroethyl n-propyl ether, (2-fluoroethyl) (3-fluoro-n-propyl) ether, (2-fluoroethyl) (3,3,3-trifluoro-n-propyl) ether, (2-fluoroethyl) (2,2,3,3-tetrafluoro-n-propyl) ether, (2-fluoroethyl) (2,2,3,3,3-pentafluoro-n-propyl) ether, 2,2,2-trifluoroethyl-n-propyl ether, (3-fluoro-n-propyl) (2,2,2-trifluoroethyl) ether, (2,2,2-trifluoroethyl) (3,3,3-trifluoro-n-propyl) ether, (2,2,3,3-tetrafluoro-n-propyl) (2,2,2-trifluoroethyl) ether, (2,2,3,3,3-pentafluoro-n-propyl) (2,2,2-trifluoroethyl) ether, n-propyl (1,1,2,2-tetrafluoroethyl) ether, (3-fluoro-n-propyl) (1,1,2,2-tetrafluoroethyl) ether, (1,1,2,2-tetrafluoroethyl) (3,3,3-trifluoro-n-propyl) ether, (1,1,2,2-tetrafluoroethyl) (2,2,3,3-tetrafluoro-n-propyl) ether, (2,2,3,3,3-pentafluoro-n-propyl) (1,1,2,2-tetrafluoroethyl) ether, di-n-propyl ether, (3-fluoro-n-propyl) (n-propyl) ether, (n-propyl) (3,3,3-trifluoro-n-propyl) ether, (n-propyl) (2,2,3,3-tetrafluoro-n-propyl) ether, (2,2,3,3,3-pentafluoro-n-propyl) (n-propyl) ether, bis(3-fluoro-n-propyl) ether, (3-fluoro-n-propyl) (3,3,3-trifluoro-n-propyl) ether, (3-fluoro-n-propyl) (2,2,3,3-tetrafluoro-n-propyl) ether, (3-fluoro-n-propyl) (2,2,3,3,3-pentafluoro-n-propyl) ether, bis(3,3,3-trifluoro-n-propyl) ether, (2,2,3,3-tetrafluoro-n-propyl) (3,3,3-trifluoro-n-propyl) ether, (2,2,3,3,3-pentafluoro-n-propyl) (3,3,3-trifluoro-n-propyl) ether, bis(2,2,3,3-tetrafluoro-n-propyl) ether, (2,2,3,3-tetrafluoro-n-propyl) (2,2,3,3,3-pentafluoro-n-propyl) ether, bis(2,2,3,3,3-pentafluoro-n-propyl) ether, di-n-butyl ether, dimethoxymethane, methoxyethoxymethane, (2-fluoroethoxy)methoxymethane, methoxy(2,2,2-trifluoroethoxy)methane, methoxy(1,1,2,2-tetrafluoroethoxy)methane, diethoxymethane, ethoxy(2-fluoroethoxy)methane, ethoxy(2,2,2-trifluoroethoxy)methane, ethoxy(1,1,2,2-tetrafluoroethoxy)methane, bis(2-fluoroethoxy)methane, (2-fluoroethoxy)(2,2,2-trifluoroethoxy)methane, (2-fluoroethoxy)(1,1,2,2-tetrafluoroethoxy)methane, bis(2,2,2-trifluoroethoxy)methane, (1,1,2,2-tetrafluoroethoxy)(2,2,2-trifluoroethoxy)methane, bis(1,1,2,2-tetrafluoroethoxy)methane, dimethoxyethane, ethoxymethoxyethane, (2-fluoroethoxy)methoxyethane, methoxy(2,2,2-trifluoroethoxy)ethane, methoxy(1,1,2,2-tetrafluoroethoxy)ethane, diethoxyethane, ethoxy(2-fluoroethoxy)ethane, ethoxy(2,2,2-trifluoroethoxy)ethane, ethoxy(1,1,2,2-tetrafluroethoxy)ethane, bis(2-fluoroethoxy)ethane, (2-fluoroethoxy)(2,2,2-trifluoroethoxy)ethane, (2-fluoroethoxy)(1,1,2,2-tetrafluoroethoxy)ethane, bis(2,2,2-trifluoroethoxy)ethane, (1,1,2,2-tetrafluoroethoxy)(2,2,2-trifluoroethoxy)ethane, bis(1,1,2,2-tetrafluoroethoxy)ethane, ethyleneglycol di-n-propyl ether, ethyleneglycol di-n-butyl ether, diethyleneglycol dimethyl ether, etc.

The cyclic ethers having from 3 to 6 carbon atoms include tetrahydrofuran, 2-methyltetrahydrofuran, 3-methyltetrahydrofuran, 1,3-dioxane, 2-methyl-1,3-dioxane, 4-methyl-1,3-dioxane, 1,4-dioxane and the like, and their fluorinated compounds.

Above all, preferred are dimethoxyethane, diethoxymethane, ethoxymethoxymethane, ethylene glycol di-n-propyl ether, ethylene glycol di-n-butyl ether and diethyleneglycol dimethyl ether from the viewpoint that their solvation capability with lithium ions is high and they improve ionic dissociability. More preferred are dimethoxymethane, diethoxymethane and ethoxymethoxymethane as securing low viscosity and high ionic conductivity.

The content of the ether compound is, in general, preferably at least 5% by volume in 100% by volume of the nonaqueous solvent, more preferably at least 10% by volume, even more preferably at least 15% by volume, and is preferably at most 70% by volume, more preferably at most 60% by volume, even more preferably at most 50% by volume. Falling within the range, the compound can readily secure the effect of the linear ether for improving the ionic conductivity derived from the improvement in the degree of lithium ion dissociation and from the viscosity reduction.

### [4. Electrolyte]

As the electrolyte, generally used is a lithium salt. Not specifically defined, any lithium salt known usable for the intended use is employable here. Concretely, the following are mentioned.

Inorganic lithium salts such as LiPF₆, LiBF₄, LiClO₄, LiAlF₄, LiSbF₆, LiNbF₆, LiTaF₆, LiWF₇, etc.;
Lithium fluorophosphates such as LiPO₃F, LiPO₂F₂, etc.;
Lithium tungstates such as LiWOF₅, etc.;
Lithium carboxylates such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, CF₃CF₂CF₂CF₂CO₂Li, etc.;
Lithium sulfonates such as FSO₃Li, CH₃SO₃Li, CH₂FSO₃Li, CHF₂SO₃Li, CF₃SO₃Li, CF₃CF₂SO₃Li, CF₃CF₂CF₂SO₃Li, CF₃CF₂CF₂CF₂SO₃Li, etc.;
Lithium imide salts such as LiN(FCO)₂, LiN(FCO)(FSO₂), LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonylimide, lithium cyclic 1,3-perfluoropropanedisulfonylimide, LiN(CF₃SO₂)(C₄F₉SO₂), etc.;
Lithium methide salts such as LiC(FSO₂)₃, LiC(CF₃SO₂)₃, LiC(C₂F₅SO₂)₃, etc.;
Lithium oxalatoborate salts such as lithium difluorooxalatoborate, lithium bis(oxalato)borate, etc.;
Lithium oxalatophosphate salts such as lithium tetrafluorooxalatophosphate, lithium difluorobis(oxalato)phosphate, lithium tris(oxalato)phosphate, etc.;
Besides the above, fluorine-containing organic lithium salts such as LiPF₄(CF₃)₂, LiPF₄(C₂F₅)₂, LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, LiBF₂(C₂F₅SO₂)₂, etc.

Above all, especially preferred are LiPF₆, LiBF₄, LiSbF₆, LiTaF₆, LiPO₂F₂, FSO₃Li, CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonylimide, lithium cyclic 1,3-perfluoropropanedisulfonylimide, LiC(FSO₂)₃, LiC(CF₃SO₂)₃, LiC(C₂F₅SO₂)₃, lithium bisoxalatoborate, lithium difluorooxalatoborate, lithium tetrafluorooxalatophosphate, lithium difluorobisoxalatophosphate, lithium tris(oxalato)phosphate, LiBF₃CF₃, LiBF₃C₂F₅, LiPF₃(CF₃)₃, LiPF₃(C₂F₅)₃ and the like, as effective for improving output characteristics, high rate charge-discharge characteristics, high-temperature storage characteristics, cycle characteristics, etc.

One alone or two or more types of these lithium salts may be used here either singly or as combined. Preferred embodiments of using two or more types of those salts include a combined use of LiPF₆ and LiBF₄, a combined use of LiPF₆ and FSO₃Li, a combined use of LiPF₆ and LiPO₂F₂, etc. The combined use is effective for improving load characteristics and cycle characteristics. Of those, preferred is a combined use of LiPF₆ and LiBF₄ as realizing the gas generation preventing effect.

In the combined use of LiPF₆ and LiBF₄, the LiBF₄ concentration is not limited relative to 100% by mass of the entire nonaqueous electrolytic solution, and may be any desired one not significantly detracting from the advantageous effects of the present invention. In general, however, the concentration is 0.001% by mass or more of the nonaqueous electrolytic solution in the present invention, preferably 0.01% by mass or more, and on the other hand, the upper limit thereof is generally 10% by mass or less, preferably 5% by mass or less. Falling within the range, output characteristics, load characteristics, low-temperature characteristics, cycle characteristics, high-temperature characteristics and the like could be improved. On the other hand, however, when the concentration is too high, the salt may precipitate at low temperatures to worsen battery characteristics, and when too small, the effect of improving low-temperature characteristics, cycle characteristics, high-temperature storage characteristics and the like would lower.

Here, in the case where LiPO₂F₂ is added to the electrolytic solution, the electrolytic solution may be prepared according to a method where LiPO₂F₂ that has been separately synthesized in a known method is added to the electrolytic solution containing LiPF₆, or according to a method where water is made to coexist in the battery constituent elements such as active materials, electrode plates and others to be mentioned below, and while a battery is constructed by using an electrolytic solution that contains LiPF₆, LiPO₂F₂ is generated in the system. In the present invention, any of these methods is employable.

The method of measuring the content of LiPO₂F₂ in the nonaqueous electrolytic solution or the nonaqueous electrolytic solution secondary battery is not specifically defined, for which any known method is employable. Concretely, there may be mentioned ion chromatography, F nuclear magnetic resonance spectrometry, etc.

Another preferred embodiment is a combined use of an inorganic lithium salt and an organic lithium salt. Using the two is effective for preventing degradation in high-temperature storage. The organic lithium salt is preferably CF₃SO₃Li, LiN(FSO₂)₂, LiN(FSO₂)(CF₃SO₂), LiN(CF₃SO₂)₂, LiN(C₂F₅SO₂)₂, lithium cyclic 1,2-perfluoroethanedisulfonylimide, lithium cyclic 1,3-perfluoropropanedisulfonylimide, LiC(FSO₂)₃, LiC(CF₃SO₂)₃, LiC(C₂F₅SO₂)₃, lithium bisoxalatoborate, lithium difluorooxalatoborate, lithium tetrafluorooxalatophosphate, lithium difluorobisoxalatophosphate, LiBF₃CF₃, LiBF₃C₂F₅, LiPF₃(CF₃)₃, LiPF₃(C₂F₅)₃, etc. In this case, the proportion of the organic lithium salt to 100% by mass of the entire nonaqueous electrolytic solution is preferably 0.1% by mass or more, more preferably 0.5% by mass or more, and is preferably 30% by mass or less, more preferably 20% by mass or less.

The lithium salt concentration in the nonaqueous electrolytic solution is not specifically defined so far as the salt does not detract from the advantageous effects of the present invention. From the viewpoint of controlling the electric conductivity of the electrolytic solution to fall within a preferred range and for securing good battery performance, the total molar concentration of lithium in the nonaqueous electrolytic solution is preferably 0.3 mol/L or more, more preferably 0.4 mol/L or more, even more preferably 0.5 mol/L or more, and is preferably 3 mol/L or less, more preferably 2.5 mol/L or less, even more preferably 2.0 mol/L or less. Falling within the range, low-temperature characteristics, cycle characteristics and high-temperature characteristics could be improved. On the other hand, when the total molar concentration of lithium is too low, then the electric conductivity of the electrolytic solution may be insufficient, as the case may be, while on the other hand, when the concentration is too high, then the electric conductivity may also lower owing to viscosity increase, and the battery performance may be thereby worsened.

### [5. Auxiliary Agent]

The nonaqueous electrolytic solution secondary battery of the present invention may suitably contain any other auxiliary agent in accordance with the intended object thereof. The auxiliary agent includes unsaturated bond-having cyclic carbonates, fluorine atom-having unsaturated cyclic carbonates, carbon-carbon triple bond-having compounds, cyclic sulfonates, cyano group-having compounds, isocyanate group-having compounds, overcharge inhibitors and other auxiliary agents, as mentioned below.

### [5.1 Unsaturated Bond-Having Cyclic Carbonates]

A cyclic carbonate having an unsaturated bond (hereinafter this may be abbreviated as "unsaturated cyclic carbonate") may be incorporated in the nonaqueous electrolytic solution in the present invention for forming a coating film on the surface of the negative electrode in the nonaqueous electrolytic solution secondary battery and for prolonging the life of the battery.

Not specifically defined, the unsaturated cyclic carbonate may be any cyclic carbonate having a carbon-carbon unsaturated bond or any cyclic carbonate having a carbon-carbon triple bond to be mentioned below, and any such unsaturated carbonate can be used here. Cyclic carbonates having an aromatic ring are also within the scope of the unsaturated cyclic carbonate.

The unsaturated cyclic carbonate includes vinylene carbonates, ethylene carbonates substituted with a substituent having an aromatic ring or a carbon-carbon unsaturated bond, phenyl carbonates, vinyl carbonates, allyl carbonates, catechol carbonates, etc.

The vinylene carbonates include vinylene carbonate, methylvinylene carbonate, 4,5-dimethylvinylene carbonate, phenylvinylene carbonate, 4,5-diphenylvinylene carbonate, vinylvinylene carbonate, 4,5-vinylvinylene carbonate, allylvinylene carbonate, 4,5-diallylvinylene carbonate, etc.

Specific examples of the ethylene carbonates substituted with a substituent having an aromatic ring or a carbon-carbon unsaturated bond include vinylethylene carbonate, 4,5-divinylethylene carbonate, 4-methyl-5-vinylethylene carbonate, 4-allyl-5-vinylethylene carbonate, phenylethylene carbonate, 4,5-diphenylethylene carbonate, 4-phenyl-5-vinylethylene carbonate, 4-allyl-5-phenylethylene carbonate, allylethylene carbonate, 4,5-diallylethylene carbonate, 4-methyl-5-allylethylene carbonate, etc.

Above all, as the unsaturated cyclic carbonate preferred for combined use, vinylene carbonate, methylvinylene carbonate, 4,5-dimethylvinylene carbonate, vinylvinylene carbonate, 4,5-vinylvinylene carbonate, allylvinylene carbonate, 4,5-diallylvinylene carbonate, vinylethylene carbonate, 4,5-divinylethylene carbonate, 4-methyl-5-vinylethylene carbonate, allylethylene carbonate, 4,5-diallylethylene carbonate, 4-methyl-5-allylethylene carbonate and 4-allyl-5-vinylethylene carbonate are more preferred as capable of forming a stable interface protective film.

Not specifically defined, the molecular weight of the unsaturated cyclic carbonate may be any one not markedly detracting from the advantageous effects of the present invention. The molecular weight is preferably from 50 to 250. Falling within the range, the unsaturated cyclic carbonate can readily secure the solubility thereof in nonaqueous electrolytic solutions and can sufficiently express the advantageous effects of the present invention with ease. More preferably, the molecular weight of the unsaturated cyclic carbonate is at least 80 and is more preferably at most 150. The method for producing the unsaturated cyclic carbonate is not specifically defined, and any known method may be suitably selected and employed here for the production.

One alone or two or more different types of unsaturated cyclic carbonates may be used here either singly or as combined in any desired manner and in any desired ratio.

Not specifically defined, the content of the unsaturated cyclic carbonate may be any one not markedly detracting from the advantageous effects of the present invention. The content of the unsaturated cyclic carbonate is preferably at least 0.01% by mass in 100% by mass of the nonaqueous electrolytic solution, more preferably at least 0.1% by mass, even more preferably at least 0.2% by mass, and is preferably at most 5% by mass, more preferably at most 4% by mass, even more preferably at most 3% by mass. Falling within the range, the nonaqueous electrolytic solution secondary battery can readily express a sufficient effect of improving the cycle characteristics thereof, and can readily evade the risks of worsening the high-temperature storage characteristics thereof, increasing the gas generation amount and lowering the discharge capacity retention rate. On the other hand, however, when the amount is too small, then the present invention could not sufficiently exhibit the advantageous effects thereof, and when too large, then the resistance may increase and the output and the load characteristics may worsen.

### [5.2 Fluorine Atom-Having Unsaturated Cyclic Carbonates]

As fluorinated cyclic carbonates, also preferred for use herein are cyclic carbonates having an unsaturated bond and a fluorine atom (hereinafter this may be abbreviated as "fluorinated unsaturated cyclic carbonate"). Not specifically defined, the fluorinated unsaturated cyclic carbonate may be any one in which the number of the fluorine atom is 1 or more. In general, the number of the fluorine atoms in the fluorinated unsaturated cyclic carbonate is 6 or less, preferably 4 or less, and most preferred are those having one or two fluorine atoms.

The fluorinated unsaturated cyclic carbonates include fluorovinylene carbonate derivatives, fluoroethylene carbonate derivatives substituted with a substituent having an aromatic ring or a carbon-carbon unsaturated bon, etc.

The fluorovinylene carbonate derivatives include 4-fluorovinylene carbonate, 4-fluoro-5-methylvinylene carbonate, 4-fluoro-5-phenylvinylene carbonate, 4-allyl-5-fluorovinylene carbonate, 4-fluoro-5-vinylvinylene carbonate, etc.

The fluoroethylene carbonate derivatives substituted with a substituent having an aromatic ring or a carbon-carbon unsaturated bond include 4-fluoro-4-vinylethylene carbonate, 4-fluoro-4-allylethylene carbonate, 4-fluoro-5-vinylethylene carbonate, 4-fluoro-5-allylethylene carbonate, 4,4-difluoro-4-vinylethylene carbonate, 4,4-difluoro-4-allylethylene carbonate, 4,5-difluoro-4-vinylethylene carbonate, 4,5-difluoro-4-allylethylene carbonate, 4-fluoro-4,5-divinylethylene carbonate, 4-fluoro-4,5-diallylethylene carbonate, 4,5-difluoro-4,5-divinylethylene carbonate, 4,5-difluoro-4,5-diallylethylene carbonate, 4-fluoro-4-phenylethylene carbonate, 4-fluoro-5-phenylethylene carbonate, 4,4-difluoro-5-phenylethylene carbonate, 4,5-difluoro-4-phenylethylene carbonate, etc.

Above all, as fluorinated unsaturated cyclic carbonates preferred for combined use, 4-fluorovinylene carbonate, 4-fluoro-5-methylvinylene carbonate, 4-fluoro-5-vinylvinylene carbonate, 4-allyl-5-fluorovinylene carbonate, 4-fluoro-4-vinylethylene carbonate, 4-fluoro-4-allylethylene carbonate, 4-fluoro-5-vinylethylene carbonate, 4-fluoro-5-allylethylene carbonate, 4,4-difluoro-4-vinylethylene carbonate, 4,4-difluoro-4-allylethylene carbonate, 4,5-difluoro-4-vinylethylene carbonate, 4,5-difluoro-4-allylethylene carbonate, 4-fluoro-4,5-divinylethylene carbonate, 4-fluoro-4,5-diallylethylene carbonate, 4,5-difluoro-4,5-divinylethylene carbonate and 4,5-difluoro-4,5-diallylethylene carbonate are more preferred as capable of forming a stable interface protective film.

Not specifically defined, the molecular weight of the fluorinated unsaturated cyclic carbonate may be any one not markedly detracting from the advantageous effects of the present invention. Preferably, the molecular weight is from 50 to 250. Falling within the range, the fluorinated cyclic carbonate can readily secure the solubility thereof in nonaqueous electrolytic solutions and the present invention can readily express the advantageous effects thereof. Not also specifically defined, the production method for the fluorinated unsaturated cyclic carbonate may be selected from any known methods in any desired manner. More preferably, the molecular weight is at least 100 and is also more preferably at most 200.

One alone or two or more different types of fluorinated unsaturated cyclic carbonates may be used here either singly or as combined in any desired manner and in any desired ratio.

Not specifically defined, the content of the fluorinated unsaturated cyclic carbonate may be any one not markedly detracting from the advantageous effects of the present invention. The content of the fluorinated unsaturated cyclic carbonate is generally at least 0.01% by mass in 100% by mass of the nonaqueous electrolytic solution, preferably at least 0.1% by mass, more preferably at least 0.2% by mass, and is preferably at most 5% by mass, more preferably at most 4% by mass, even more preferably at most 3% by mass. Falling within the range, the nonaqueous electrolytic solution secondary battery can readily express the effect of improving the cycle characteristics thereof and can readily evade the risks of worsening the high-temperature storage characteristics thereof, increasing the gas generation amount and lowering the discharge capacity retention rate. On the other hand, however, when the amount is too small, then the present invention could not sufficiently exhibit the advantageous effects thereof, but when too large, then the resistance may increase to lower the output and the load characteristics.

### [5.3 Carbon-Carbon Triple Bond-Having Compounds]

The nonaqueous electrolytic solution in the present invention may contain a carbon-carbon triple bond-having compound for forming a coating film on the surface of the negative electrode in the nonaqueous electrolytic solution secondary battery and for prolonging the life of the battery. Not specifically defined, the carbon-carbon triple bond-having compound may be any one having a carbon-carbon triple bond. The compound may be grouped into a linear compound having a carbon-carbon triple bond and a cyclic compound having a carbon-carbon triple bond.

As the carbon-carbon triple bond-having linear compound, preferred for use herein are one or more alkyne derivatives represented by the following general formulae (1) and/or (2).

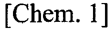

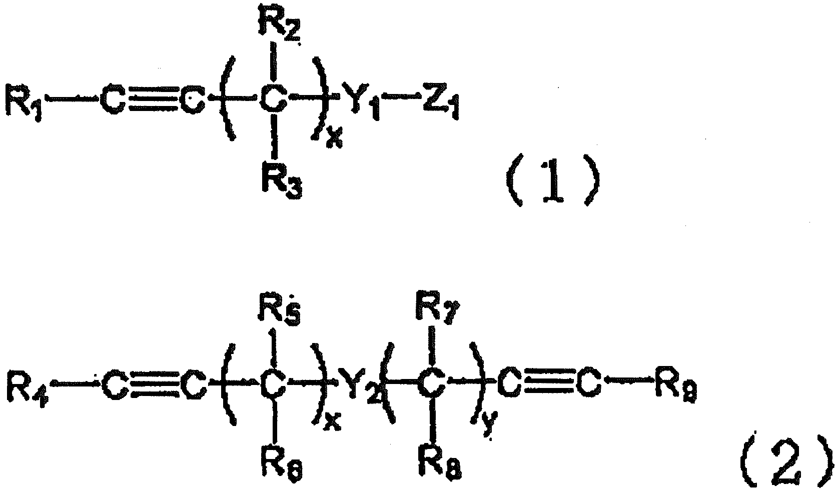

(In the formulae (1) and (2), R₁ to R₉ each independently represent a hydrogen atom, an alkyl group having from 1 to 12 carbon atoms, a cycloalkyl group having from 3 to 6 carbon atoms, or an aryl group having from 6 to 12 carbon atoms; and R₂ and R₃, R₅ and R₆, and R₇ and R₈ each may bond to each other to form a cycloalkyl group having from 3 to 6 carbon atoms. x and y each independently indicate an integer of 1 or 2. Y₁ and Y₂ is any one represented by the following formula (3), and Y₁ and Y₂ may be the same or different. Z₁ represents a hydrogen atom, an alkyl group having from 1 to 12 carbon atoms, a cycloalkyl group having from 3 to 6 carbon atoms, an aryl group having from 6 to 12 carbon atoms, or an aralkyl group having from 7 to 12 carbon atoms.)

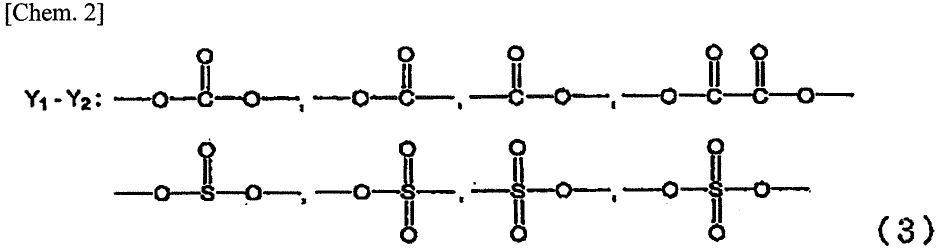

Of the compounds represented by the general formula (1), preferred are those including one or more selected from 2-propynylmethyl carbonate, 1-methyl-2-propynylmethyl carbonate, 1,1-dimethyl-2-propynylmethyl carbonate, 2-propynylethyl carbonate, 1-methyl-2-propynylethyl carbonate, 1,1-dimethyl-2-propynylethyl carbonate, 2-butynylmethyl carbonate, 1-methyl-2-butynylmethyl carbonate, 1,1-dimethyl-2-butynylmethyl carbonate, 2-propynyl formate, 1-methyl-2-propynyl formate, 1,1-dimethyl-2-prpopynyl formate, 2-butynyl formate, 1-methyl-2-butynyl formate, 1,1-dimethyl-2-butynyl formate, 2-propynyl acetate, 1-methyl-2-propynyl acetate, 1,1-dimethyl-2-propynyl acetate, 2-butynyl acetate, 1-methyl-2-butynyl acetate, 1,1-dimethyl-2-butynyl acetate, 2-propynylmethyl oxalate, 1-methyl-2-propynylmethyl oxalate, 1,1-dimethyl-2-propynylmethyl oxalate, 2-butynylmethyl oxalate, 1-methyl-2-butynylmethyl oxalate, 1,1-dimethyl-2-butynylmethyl oxalate, 2-propynylethyl oxalate, 1-methyl-2-propynylethyl oxalate, 1,1-dimethyl-2-propynylethyl oxalate, 2-butynylethyl oxalate, 1-methyl-2-butynylethyl oxalate, 1,1-dimethyl-2-butynylethyl oxalate, 2-propynyl methanesulfonate, 1-methyl-2-propynyl methanesulfonate, 1,1-dimethyl-2-propynyl methanesulfonate, 2-butynyl methanesulfonate, 1-methyl-2-butynyl methanesulfonate, 1,1-dimethyl-2-butynyl methanesulfonate, 2-propynyl trifluoromethanesulfonate, 1-methyl-2-propynyl trifluoromethanesulfonate, 1,1-dimethyl-2-propynyl trifluoromethanesulfonate, 2-butynyl trifluoromethanesulfonate, 1-methyl-2-butynyl trifluoromethanesulfonate, 1,1-dimethyl-2-butynyl trifluoromethanesulfonate, 2-propynyl trifluoromethanesulfonate, 1-methyl-2-propynyl trifluoromethanesulfonate, 1,1-dimethyl-2-propyl trifluoromethanesulfonate, 2-butynyl trifluoromethanesulfonate, 1-methyl-2-butynyl trifluoromethanesulfonate, 1,1-dimethyl-2-butynyl trifluoromethanesulfonate, 2-propynyl benzenesulfonate, 1-methyl-2-propynyl benzenesulfonate, 1,1-dimethyl-2-propynyl benzenesulfonate, 2-butynyl benzenesulfonate, 1-methyl-2-butynyl benzenesulfonate, 1,1-dimethyl-2-butynyl benzenesulfonate, 2-propynyl p-toluenesulfonate, 1-methyl-2-propynyl p-toluenesulfonate, 1,1-dimethyl-2-propynyl p-toluenesulfonate, 2-butynyl p-toluenesulfonate, 1-methyl-2-butynyl p-toluenesulfonate, 1,1-dimethyl-2-butynyl p-toluenesulfonate, 2-propynyl methylsulfate, 1-methyl-2-propynyl methylsulfate, 1,1-dimethyl-2-propynyl methylsulfate, 2-butynyl methylsulfate, 1-methyl-2-butynyl methylsulfate, 1,1-dimethyl-2-propynyl methylsulfate, 2-propynyl ethylsulfate, 1-methyl-2-propynyl ethylsulfate, 1,1-dimethyl-2-propynyl ethylsulfate, 2-butynyl ethylsulfate, 1-methyl-2-butynyl ethylsulfate, and 1,1-dimethyl-2-butynyl ethylsulfate. In particular, more preferred are those containing one or more selected from 2-propynylmethyl carbonate, 1-methyl-2-propynylmethyl carbonate, 1,1-dimethyl-2-propynylmethyl carbonate, 2-propynylethyl carbonate, 2-butynylmethyl carbonate, 2-propynyl formate, 1-methyl-2-propynyl formate, 1,1-dimethyl-2-propynyl formate, 2-butynyl formate, 2-propynyl acetate, 1-methyl-2-propynyl acetate, 1,1-dimethyl-2-propynyl acetate, 2-butynyl acetate, 2-propynylmethyl oxalate, 1-methyl-2-propynylmethyl oxalate, 1,1-dimethyl-2-propynylmethyl oxalate, 2-butynylmethyl oxalate, 2-propynyl methanesulfonate, 1-methyl-2-propynyl methanesulfonate, 1,1-dimethyl-2-propynyl methanesulfonate, 2-butynyl methanesulfonate, 1-methyl-2-butynyl methanesulfonate, 2-propynyl methylsulfate, 1-methyl-2-propynyl methylsulfate, 1,1-dimethyl-2-propynyl methylsulfate, and 2-butynyl methylsulfate.

Of the compounds represented by the general formula (2), preferred are those containing one or more selected from di(2-propynyl) carbonate, di(2-butynyl) carbonate, di(1-methyl-2-propynyl) carbonate, di(1-methyl-2-butynyl) carbonate, di(1,1-dimethyl-2-propynyl) carbonate, di(1,1-dimethyl-2-butynyl) carbonate, di(2-propynyl) oxalate, di(2-butynyl) oxalate, di(1-methyl-2-propynyl) oxalate, di(1-methyl-2-butynyl) oxalate, di(1,1-dimethyl-2-propynyl) oxalate, di(1,1-dimethyl-2-butynyl) oxalate, di(2-propynyl) sulfite, di(2-butynyl) sulfite, di(1-methyl-2-propynyl) sulfite, di(1-methyl-2-butynyl) sulfite, di(1,1-dimethyl-2-propynyl) sulfite, di(1,1-dimethyl-2-butynyl) sulfite, di(2-propynyl) sulfate, di(2-butynyl) sulfate, di(1-methyl-2-propynyl) sulfate, di(1-methyl-2-butynyl) sulfate, di(1,1-dimethyl-2-propynyl) sulfate, and di(1,1-dimethyl-2-butynyl) sulfate. In particular, more preferred are those containing one or more selected from di(2-propynyl) carbonate, di(2-butynyl) carbonate, di(2-propynyl) oxalate, di(2-butynyl) oxalate, di(2-propynyl) sulfate, and di(2-butynyl) sulfate.

Of the above-mentioned alkyne derivatives, most preferred compounds are 2-propynylmethyl carbonate, 2-propynylethyl carbonate, 2-butynylmethyl carbonate, 2-propynyl formate, 2-butynyl formate, 2-propynyl acetate, 2-butynyl acetate, 2-propynylmethyl oxalate, 2-butynylmethyl oxalate, 2-propynyl methanesulfonate, 2-butynyl methanesulfonate, 1-methyl-2-butynyl methanesulfonate, 2-propynyl methylsulfate, 2-butynyl methylsulfate, di(2-propynyl) carbonate, di(2-butynyl) carbonate, di(2-propynyl) oxalate, di(2-butynyl) oxalate, di(2-propynyl) sulfate, and di(2-butynyl) sulfate.

One alone or two or more types of the compounds represented by the general formulae (1) and (2) may be used here either singly or as combined in any desired manner and in any desired ratio. Not specifically defined, the content of the compound represented by the general formulae (1) and (2) may be any one not markedly detracting from the advantageous effects of the present invention.

The content of the compound represented by the general formulae (1) and (2) is preferably 0.001 % by mass or more in 100% by mass of the nonaqueous electrolytic solution, more preferably 0.01 % by mass or more, even more preferably 0.1 % by mass or more, and is preferably 5% by mass or less, more preferably 4% by mass or less, even more preferably 3% by mass or less. Falling within the range, the nonaqueous electrolytic solution secondary battery can express sufficiently the cycle characteristics improving effect with ease, and can readily evade the risks of worsening the high-temperature storage characteristics thereof, increasing the gas generation amount and lowering the discharge capacity retention rate. On the other hand, however, when the amount is too small, then the present invention could not sufficiently exhibit the advantageous effects thereof, and when too large, then the resistance may increase and the output and the load characteristics may worsen.

As the cyclic compound having a carbon-carbon triple bond, preferred are those represented by the following general formula (4).

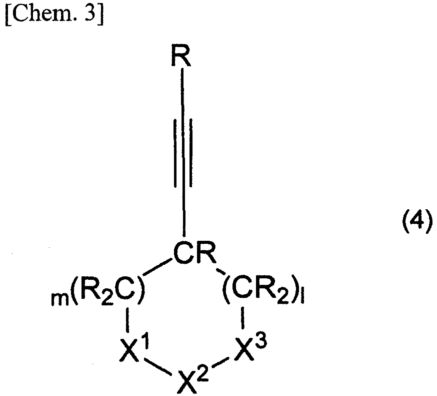

(In the formula (4), X¹ and X³ each represent CR¹₂, C=O, C=N-R¹, C=P-R¹, O, S, N-R¹ or P-R¹, and these may be the same or different. X² represents CR¹₂, C=O, S=O, S(=O)₂, P(=O)-R², or P(=O)-OR³. In the formula, R and R¹ each independently represent a hydrogen atom a halogen atom, or a hydrocarbon group having from 1 to 20 carbon atoms and optionally having a substituent. In case where the formula has plural R's and/or R¹'s, these may be the same or different. R² represents a hydrocarbon group having from 1 to 20 carbon atoms and optionally having a substituent. Plural R²'s may be the same or different. R³ represents Li, NR⁴₄, or a hydrocarbon group having from 1 to 20 carbon atoms and optionally having a substituent. R⁴ represents a hydrocarbon group having from 1 to 20 carbon atoms and optionally having a substituent, and plural R⁴'s may be the same or different. 1 and m each independently indicate an integer of 0 or more.)

In the general formula (4), X¹ and X³ are not specifically defined so far as they each fall within the range described in the general formula (4). Preferably, they are independently CR¹₂, O, S or N-R¹. X² is not also specifically defined so far as it falls within the range described in the general formula (4), but is more preferably C=O, S=O, S(=O)₂, P(=O)-R² or P(=O)-OR³. R and R¹ are not specifically defined so far as they each fall within the range described in the general formula (4). Preferably, they are independently a hydrogen atom, a fluorine atom, a saturated aliphatic hydrocarbon group optionally having a substituent, an unsaturated aliphatic hydrocarbon group optionally having a substituent, or an aromatic hydrocarbon group optionally having a substituent.

R² and R⁴ are not specifically defined so far as they each fall within the range described in the general formula (4). Preferably, they are independently a saturated aliphatic hydrocarbon group optionally having a substituent, an unsaturated aliphatic hydrocarbon group optionally having a substituent, or an aromatic hydrocarbon/aromatic heterocyclic group optionally having a substituent.

R³ is not specifically defined so far as it falls within the range described in the general formula (4). Preferably, the substituent is Li, a saturated aliphatic hydrocarbon group optionally having a substituent, an unsaturated aliphatic hydrocarbon group optionally having a substituent, or an aromatic hydrocarbon/aromatic heterocyclic group optionally having a substituent.

Of the saturated aliphatic hydrocarbon optionally having a substituent, the unsaturated aliphatic hydrocarbon optionally having a substituent, and the aromatic hydrocarbon/aromatic hetero ring optionally having a substituent, the substituent is not specifically defined, for which preferred are a halogen atom, an ester of a saturated aliphatic hydrocarbon group optionally having a substituent, an unsaturated aliphatic hydrocarbon group optionally having a substituent or a saturated aliphatic hydrocarbon group optionally having a substituent or the like of a carboxylic acid, a carbonic acid, a sulfonic acid, a phosphoric acid, a phosphorous acid or the like, etc. More preferred is a halogen atom, and most preferred is a fluorine atom.

Concretely, the saturated aliphatic hydrocarbon is preferably a methyl group, an ethyl group, a fluoromethyl group, a difluoromethyl group, a trifluoromethyl group, a 1-fluoroethyl group, a 2-fluoroethyl group, a 1,1-difluoroethyl group, a 1,2-difluoroethyl group, a 2,2-difluoroethyl group, a 1,1,2-trifluoroethyl group, a 1,2,2-trifluoroethyl group, a 2,2,2-trifluoroethyl group, a phenyl group, a cyclopentyl group, or a cyclohexyl group.

Concretely, the unsaturated aliphatic hydrocarbon is preferably an ethenyl group, a 1-fluoroethenyl group, a 2-fluoroethenyl group, a 1-methylethenyl group, a 2-propenyl group, a 2-fluoro-2-propenyl group, a 3-fluoro-2-propenyl group, an ethynyl group, a 2-fluoroethynyl group, or a 2-propynyl group, a 3-fluoro-2-propynyl group.

The aromatic hydrocarbon is preferably a phenyl group, a 2-fluorophenyl group, a 3-fluorophenyl group, a 2,4-difluorophenyl group, a 2,6-difluorophenyl group, a 3,5-difluorophenyl group, or a 2,4,6-trifluorophenyl group.

The aromatic hetero ring is preferably a 2-furanyl group, a 3-furanyl group, a 2-thiophenyl group, a 3-thiophenyl group, a 1-methyl-2-pyrrolyl group, or a 1-methyl-3-pyrrolyl group.

Of those, preferred are a methyl group, an ethyl group, a fluoromethyl group, a trifluoromethyl group, a 2-fluoroethyl group, a 2,2,2-trifluoroethyl group, an ethenyl group, an ethynyl group and a phenyl group.

More preferred are a methyl group, an ethyl group and an ethynyl group.

From the viewpoint of both the reactivity and the stability of the compound of the general formula (4), R is preferably a hydrogen atom, a fluorine atom or an ethynyl group. When R is any other substituent, the reactivity of the compound may lower and the expected characteristics may also worsen. When R is any other halogen atom than a fluorine atom, then the reactivity of the compound would be so high as to increase any side reaction.

Preferably, the number of the fluorine atom and the ethynyl group in R is 2 or less in total. When the number is too large, then the miscibility of the compound with an electrolytic solution may worsen, and if so, in addition, the reactivity of the compound would be so high as to increase any side reaction.

1 and m are not specifically defined so far as they each fall within the range described in the general formula (4), but preferably, they each are independently 0 or 1, more preferably 1 = m = 1, or m = 1 and 1 = 0.

Of those, more preferred is m = 1 with 1 = 0. When both 1 and m are 0, then the stability of the compound may worsen owing to the strain of the ring, and the reactivity thereof would be so high as to increase any side reaction. On the other hand, when m = 2 or more, or when m = 1 and 1 = 1 or more, then a linear form would be more stable than a cyclic form in some case, and the compound could not exhibit the desired characteristics.

Further, in the formula (4), X¹ and X³ each are more preferably CR¹₂ or O. When the substituents are any others than these, the reactivity of the compound would be so high as to increase any side reaction.

The molecular weight of the compound represented by the general formula (4) is preferably 50 or more, and is preferably 500 or less. Falling within the range, the solubility of the unsaturated cyclic carbonate in the nonaqueous electrolytic solution can be well secured, and the advantageous effects of the present invention can be sufficiently expressed with ease.

More preferably, the molecular weight is 100 or more, and is more preferably 200 or less. Falling within the range, the solubility of the compound of the general formula (4) in the nonaqueous electrolytic solution can be more readily secured, and the advantageous effects of the present invention can be more sufficiently expressed with ease.

Even more preferably, plural R's are all hydrogen atoms. In this case, the possibility that the side reaction could be most favorably inhibited is high while the compound could maintain the expected characteristics. Also preferably, X² is C=O or S=O, and at least one of X¹ and X³ is O; or X² is S(=O)₂, P(=O)-R² or P(=O)-OR³, and both X¹ and X³ are O or CH₂, or any one of X¹ and X³ is O and the other is CH₂. When X² is C=O or S=O and when both X¹ and X³ are CH₂, then the reactivity of the compound would be so high as to increase any side reaction.

Specific examples of the compound represented by the general formula (4) are shown below.

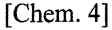

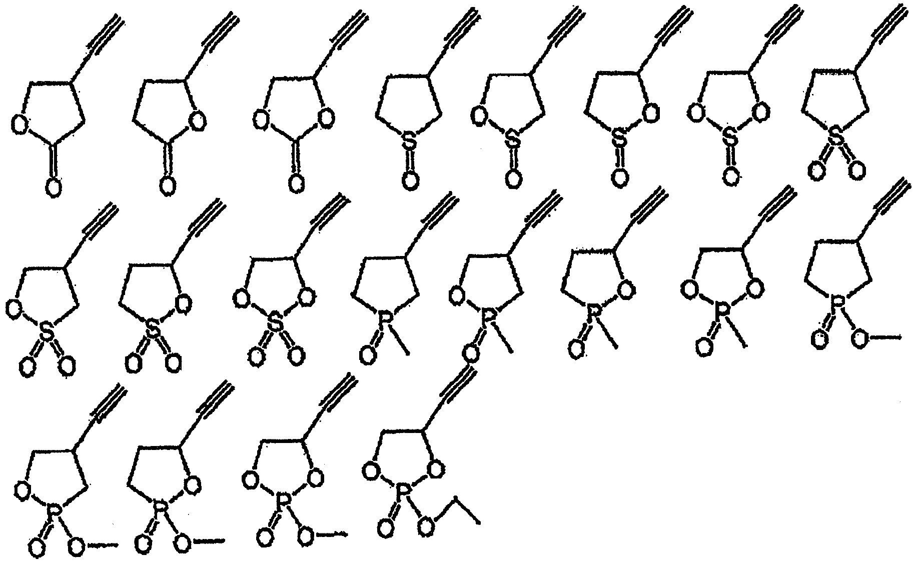

Of the compounds of the general formula (4), preferred are the compounds represented by the general formula (5) from the viewpoint of easiness in industrial production thereof.

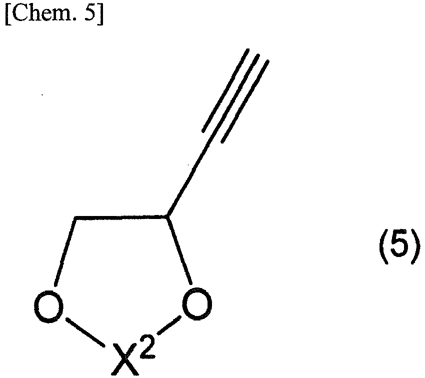

In the above formula (5), X² has the same meaning as that of X² in the formula (4), but excluding CR¹₂. In other words, the substituent here represents C=O, S=O, S(=O)₂, P(=O)-R², or P(=O)-OR³. R² and R³ have the same meanings as those in the formula (4). Specific examples of the compounds satisfying the preferred conditions are shown below.

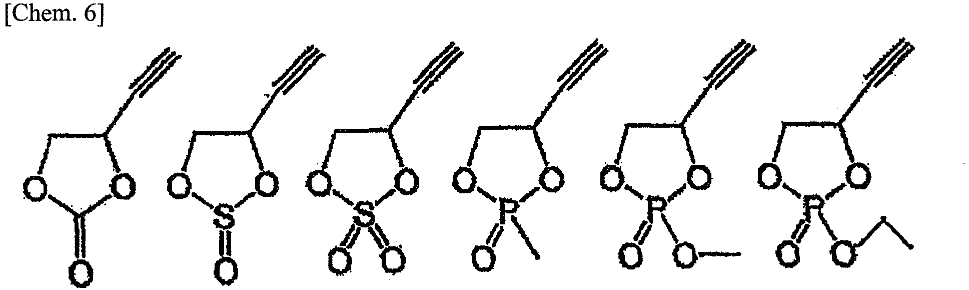

One alone or two or more types of the above-mentioned, carbon-carbon triple bond-having compounds may be used here either singly or as combined in any desired manner and in any desired ratio. Not specifically defined, the content of the carbon-carbon triple bond-having compound may be any one not markedly detracting from the advantageous effects of the present invention. The content of the carbon-carbon triple bond-having compound is preferably 0.001% by mass or more in 100% by mass of the nonaqueous electrolytic solution, more preferably 0.01% by mass, even more preferably 0.1% by mass, and is preferably 5% by mass or less, more preferably 4% by mass or less, even more preferably 3% by mass or less. Falling within the range, the nonaqueous electrolytic solutions secondary battery can readily express the effect of improving the cycle characteristics thereof and can readily evade the risks of worsening the high-temperature storage characteristics thereof, increasing the gas generation amount and lowering the discharge capacity retention rate. On the other hand, however, when the content is too small, then the present invention could not sufficiently exhibit the advantageous effects thereof, but when too large, then the resistance may increase to lower the output and the load characteristics.

### [5.4 Cyclic Sulfonates]

Preferably, the nonaqueous electrolytic solution in the present invention contains a cyclic sulfonate. Not specifically defined, the molecular weight of the cyclic sulfonate compound may be any one not markedly detracting from the advantageous effects of the present invention. The molecular weight is preferably at least 100 and is preferably at most 250. Falling within the range, the cyclic sulfonate compound can readily secure the solubility thereof in the nonaqueous electrolytic solution and the present invention can readily express the advantageous effects thereof. Not also specifically defined, the production method for the cyclic sulfonate compound may be selected from any known methods in any desired manner.

Cyclic sulfonate compounds usable in the nonaqueous electrolytic solution in the present invention include, for example:
monosulfonate compounds such as 1,3-propanesultone, 1-fluoro-1,3-propanesultone, 2-fluoro-1,3-propanesultone, 3-fluoro-1,3-propanesultone, 1-methyl-1,3-propanesultone, 2-methyl-1,3-propanesultone, 3-methyl-1,3-propanesultone, 1,4-butanesultone, 1-fluoro-1,4-butanesultone, 2-fluoro-1,4-butanesultone, 3-fluoro-1,4-butanesultone, 4-fluoro-1,4-butanesultone, 1-methyl-1,4-butanesultone, 2-methyl-1,4-butanesultone, 3-methyl-1,4-butanesultone, 4-methyl-1,4-butanesultone, 1,5-pentanesultone, 1-fluoro-1,5-pentanesultone, 2-fluoro-1,5-pentanesultone, 3-fluoro-1,5-pentanesultone, 4-fluoro-1,5-pentanesultone, 5-fluoro-1,5-pentanesultone, 1-methyl-1,5-pentanesultone, 2-methyl-1,5-pentanesultone, 3-methyl-1,5-pentanesultone, 4-methyl-1,5-pentanesultone, 5-methyl-1,5-pentanesultone, etc.;
disulfonate compounds such as methylenemethane disulfonate, ethylenemethane disulfonate, ethylene-ethane disulfonate, etc.

Of those, preferred are 1,3-propanesultone, 1-fluoro-1,3-propanesultone, 2-fluoro-1,3-propanesultone, 3-fluoro-1,3-propanesultone, 1,4-butanesultone, methylenemethane disulfonate, and ethylenemethane disulfonate, from the viewpoint of improving storage characteristics, and more preferred are 1,3-propanesultone, 1-fluoro-1,3-propanesultone, 2-fluoro-1,3-propanesultone, and 3-fluoro-1,3-propanesultone.

Also preferred is use of a cyclic sulfonate having a carbon-carbon double bond. The carbon-carbon double bond-having cyclic sulfonate includes 1-propene-1,3-sultone, 2-propene-1,3-sultone, 1-fluoro-1-propene-1,3-sultone, 2-fluoro-1-propene-1,3-sultone, 3-fluoro-1-propene-1,3-sultone, 1-methyl-1-propene-1,3-sultone, 2-methyl-1-propene-1,3-sultone, 3-methyl-1-propene-1,3-sultone, 1-butene-1,4-sultone, 2-butene-1,4-sultone, 3-butene-1,4-sultone, 1-fluoro-1-butene-1,4-sultone, 2-fluoro-1-butene-1,4-sultone, 3-fluoro-1-butene-1,4-sultone, 4-fluoro-1-butene-1,4-sultone, 1-methyl-1-butene-1,4-sultone, 2-methyl-1-butene-1,4-sultone, 3-methyl-1-butene-1,4-sultone, 4-methyl-1-butene-1,4-sultone, etc.

Of those, preferred are 1-propene-1,3-sultone, 1-butene-1,4-sultone, 2-butene-1,4-sultone, and 3-butene-1,4-sultone.

One alone or two or more types of the cyclic sulfonate compounds may be used here either singly or as combined in any desire manner and in any desired ratio.

Not specifically defined, the content of the cyclic sulfonate compound in the entire nonaqueous electrolytic solution in the present invention may be any one not markedly detracting from the advantageous effects of the present invention. The content is generally 0.001% by mass or more of the nonaqueous electrolytic solution in the present invention, preferably 0.1% by mass or more, more preferably 0.3% by mass or more, and is generally 10% by mass or less, preferably 5% by mass or less, more preferably 3% by mass or less. Satisfying the range could enhance the effect of improving output characteristics, load characteristics, low-temperature characteristics, cycle characteristics and high-temperature storage characteristics and the effect of preventing gas generation.

### [5.5 Cyano Group-Having Compounds]

Preferably, the nonaqueous electrolytic solution in the present invention contains a compound having a cyano group. The cyano group-having compound may be any compound having a cyano group in the molecule, and the type thereof is not specifically defined. More preferred are the compounds represented by the general formula (6).

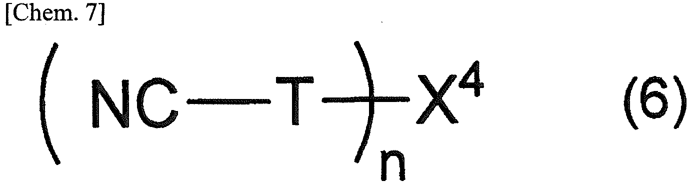

(In the above-mentioned general formula (6), T represents an organic group composed of one or more atoms selected from a group consisting of a carbon atom, a hydrogen atom, a nitrogen atom, an oxygen atom, a sulfur atom, a phosphorus atom and a halogen atom. X⁴ represents an n-valent organic group having from 1 to 10 carbon atoms and optionally having a substituent. n is an integer of 1 or more. When n is 2 or more, plural T's may be the same or different.)

Not specifically defined, the molecular weight of the cyano group-having compound may be any one not markedly detracting from the advantageous effects of the present invention. The molecular weight is preferably 50 or more, more preferably 80 or more, even more preferably 100 or more, and is preferably 200 or less. Falling within the range, the solubility of the cyano group-having compound in the nonaqueous electrolytic solution can be readily secured and the advantageous effects of the present invention can be thereby readily expressed. The production method for the cyano group-having compound is not specifically defined, and for the compound production, any known method may be suitably selected.

Specific examples of the compound represented by the general formula (6) include, for example:
compounds having one cyano group, such as acetonitrile, propionitrile, butyronitrile, isobutyronitrile, valeronitrile, isovaleronitrile, lauronitrile, 2-methylbutyronitrile, 2,2-dimethylbutyronitrile, hexanenitrile, cyclopentanecarbonitrile, cyclohexanecarbonitrile, acrylonitrile, methacrylonitrile, crotononitrile, 3-methylcrotononitrile, 2-methyl-2-butenenitrile, 2-pentenenitrile, 2-methyl-2-pentenenitrile, 3-methyl-2-pentenenitrile, 2-hexenenitrile, fluoroacetonitrile, difluoroacetonitrile, trifluoroacetonitrile, 2-fluoropropionitrile, 3-fluoropropionitrile, 2,2-difluoropropionitrile, 2,3-difluoropropionitrile, 3,3-difluoropropionitrile, 2,2,3-trifluoropropionitrile, 3,3,3-trifluoropropionitrile, 3,3'-oxydipropionitrile, 3,3'-thiodipropionitrile, 1,2,3-propanetricarbonitrile, 1,3,5-pentanetricarbonitrile, pentafluoropropionitrile, etc.;
compounds having two cyano groups, such as malononitrile, succinonitrile, glutaronitrile, adiponitrile, pimelonitrile, suberonitrile, azelanitrile, sebaconitrile, undecanedinitrile, dodecanedinitrile, methylmalononitrile, ethylmalononitrile, i-propylmalononitrile, t-butylmlononitrile, methylsuccinonitrile, 2,2-dimethylsuccinonitrile, 2,3-dimethylsuccinonitrile, trimethylsuccinonitrile, tetramethylsuccinonitrile, 3,3'-(ethylenedioxy)dipropionitrile, 3,3'-(ethylenedithio)dipropionitrile, etc.;
compounds having three cyano groups, such as 1,2,3-tris(2-cyanoethoxy)propane, tris(2-cyanoethyl)amine, etc.;
cyanate compounds, such as methyl cyanate, ethyl cyanate, propyl cyanate, butyl cyanate, pentyl cyanate, hexyl cyanate, heptyl cyanate, etc.;
sulfur-containing compounds, such as methyl thiocyanate, ethyl thiocyanate, propyl thiocyanate, butyl thiocyanate, pentyl thiocyanate, hexyl thiocyanate, heptyl thiocyanate, methanesulfonyl cyanide, ethanesulfonyl cyanide, propanesulfonyl cyanide, butanesulfonyl cyanide, pentanesulfonyl cyanide, hexanesulfonyl cyanide, heptanesulfonyl cyanide, methylsulfurocyanidate, ethylsulfurocyanidate, propylsulfurocyanidate, butylsulfurocyanidate, pentylsulfurocyanidate, hexylsulfurocyanidate, heptylsulfurocyanidate, etc.;
phosphorus-containing compounds, such as cyanodimethyl phosphine, cyanodimethyl phosphine oxide, methyl cyanodimethylphosphinate, methyl cyanomethylphosphinite, dimethylphosphinic acid cyanide, dimethylphosphinous acid cyanide, dimethyl cyanophosphonate, dimethyl cyanophosphonite, cyanomethyl methylphosphonate, cyanomethyl methylphosphinite, cyanodimethyl phosphate, cyanodimethyl phosphite, etc.

Of those, preferred are acetonitrile, propionitrile, butyronitrile, i-butyronitrile, valeronitrile, i-valeronitrile, lauronitrile, crotononitrile, 3-methylcrotononitrile, malononitrile, succinonitrile, glutaronitrile, adiponitrile, pimelonitrile, suberonitrile, azelanitrile, sebaconitrile, undecanedinitrile and dodecanedinitrile, from the viewpoint of improving storage characteristics; and more preferred are compounds having two cyano groups, such as malononitrile, succinonitrile, glutaronitrile, adiponitrile, pimelonitrile, suberonitrile, azelanitrile, sebaconitrile, undecanedinitrile, dodecanedinitrile, etc.

One alone or two or more compounds having a cyano group may be used here either singly or as combined in any desired manner and in any desired ratio.

Not specifically defined, the content of the cyano group-having compound in the entire nonaqueous electrolytic solution in the present invention may be any one not markedly detracting from the advantageous effects of the present invention. In general, however, the compound is contained in the nonaqueous electrolytic solution in the present invention in an amount of generally at least 0.001% by mass, preferably at least 0.1% by mass, more preferably at least 0.3% by mass, and is typically in an amount of at most 10% by mass, preferably at most 5% by mass, even more preferably at most 3% by mass. When the concentration satisfies the above-mentioned range, then the effects of output characteristics, load characteristics, low-temperature characteristics, cycle characteristics, high-temperature storage characteristics and others could be bettered more, and the effect of preventing gas generation could also be bettered more.

### [5.6 Isocyanate Group-Having Compounds]

Preferably, the nonaqueous electrolytic solution in the present invention contains a compound having an isocyanate group. Here, the isocyanate group-having compound may be any compound having an isocyanate group in the molecule such as the compounds represented by the general formula (7) or (8), and the type thereof is not specifically defined.

### [Chem. 8]

**A**-**B-N=C=O** **(7)**

(In the general formula (7), A represents a hydrogen atom, a halogen atom, a vinyl group, an isocyanate group, a C₁ to C₂₀ aliphatic hydrocarbon group (optionally having a hetero atom) or a C₆ to C₂₀ aromatic hydrocarbon group (optionally having a hetero atom). B represents CO, SO₂, a C₁ to C₂₀ aliphatic hydrocarbon group (optionally having a hetero atom) or a C₆ to C₂₀ aromatic hydrocarbon group (optionally having a hetero atom).)

### [Chem. 9]

**NCO-X-NCO** **(8)**

(In the general formula (8), X represents a hydrocarbon group having from 1 to 16 carbon atoms and optionally substituted with a fluorine atom.)

Specific examples of the compound represented by the general formula (7) include, for example, monoisocyanates such as methyl isocyanate, ethyl isocyanate, n-propyl isocyanate, isopropyl isocyanate, n-butyl isocyanate, t-butyl isocyanate, cyclopentyl isocyanate, cyclohexyl isocyanate, cyclohexyl isocyanate, phenyl isocyanate, cyclopentyl isocyanate, cyclohexyl isocyanate, phenyl isocyanate, vinyl isocyanate, allyl isocyanate, etc.

In the general formula (8), X is a hydrocarbon group having from 1 to 16 carbon atoms and optionally substituted with a fluorine atom. The carbon number of X is preferably 2 or more, more preferably 3 or more, even more preferably 4 or more, and is preferably 14 or less, more preferably 12 or less, even more preferably 10 or less, most preferably 8 or less. The type of X is not specifically defined so far as it is a hydrocarbon group. Concretely, the substituent may be any of an aliphatic linear alkylene group, an aliphatic cyclic alkylene group and an aromatic ring-containing hydrocarbon group, but is preferably an aliphatic linear alkylene group or an aliphatic cyclic alkylene group.

Specific examples of the compound represented by the general formula (8) include, for example:
linear polymethylene diisocyanates such as ethylene diisocyanate, trimethylene diisocyanate, tetramethylene diisocyanate, pentamethylene diisocyanate, hexamethylene diisocyanate, heptamethylene diisocyanate, octamethylene diisocyanate, decamethylene diisocyanate, dodecamethylene diisocyanate, tetradecamethylene diisocyanate, etc.;
branched alkylene diisocyanates, such as 1-methylhexamethylene diisocyanate, 2-methylhexamethylene diisocyanate, 3-methylhexamethylene diisocyanate, 1,1-dimethylhexamethylene diisocyanate, 1,2-dimethylhexamethylene diisocyanate, 1,3-dimethylhexamethylene diisocyanate, 1,4-dimethylhexamethylene diisocyanate, 1,5-dimethylhexamethylene diisocyanate, 1,6-dimethylhexamethylene diisocyanate, 1,2,3-trimethylhexamethylene diisocyanate, etc.;
diisocyanatoalkenes such as 1,4-diisocyanato-2-butene, 1,5-diisocyanato-2-pentene, 1,5-diisocyanato-3-pentene, 1,6-diisocyanato-2-hexene, 1,6-diisocyanato-3 -hexene, 1,8-diisocyanato-2-octente, 1,8-diisocyanato-3-octene, 1,8-diisocyanato-4-octene, etc.;
fluorine-substituted diisocyanatoalkanes such as 1,3-diisocyanato-2-fluoropropane, 1,3-diisocyanato-2,2-difluoropropane, 1,4-diisocyanato-2-fluorobutane, 1,4-diisocyanato-2,2-difluorobutane, 1,4-diisocyanato-2,3 -difluorobutane, 1,6-diisocyanato-2-fluorohexane, 1,6-diisocyanato-3-fluorohexane, 1,6-diisocyanato-2,2-difluorohexane, 1,6-diisocyanato-2,3-difluorohexane, 1,6-diisocyanato-2,4-difluorohexane, 1,6-diisocyanato-2,5-difluorohexane, 1,6-diisocyanato-3,3-difluorohexane, 1,6-diisocyanato-3,4-difluorohexane, 1,8-diisocyanato-2-fluorooctane, 1,8-diisocyanato-3-fluorooctane, 1,8-diisocyanato-4-fluorooctane, 1,8-diisocyanato-2,2-difluorooctane, 1,8-diisocyanato-2,3-difluorooctane, 1,8-diisocyanato-2,4-difluorooctane, 1,8-diisocyanato-2,5-difluorooctane, 1,8-diisocyanato-2,6-difluorooctane, 1,8-diisocyanato-2,7-difluorooctane, etc.;
cycloalkane ring-containing diisocyanates such as 1,2-diisocyanatocyclopentane, 1,3-diisocyanatocyclopentane, 1,2-diisocyanatocyclohexane, 1,3-diisocyanatocyclohexane, 1,4-diisocyanatocyclohexane, 1,2-bis(isocyanatomethyl)cyclohexane, 1,3-bis(isocyanatomethyl)cyclohexane, 1,4-bis(isocyanatomethyl)cyclohexane, dicyclohexylmethane-2,2'-diisocyanate, dicyclohexylmethane-2,4'-diisocyanate, dicyclohexylmethane-3,3'-diisocyanate, dicyclohexylmethane-4,4'-diisocyanate, etc.;
aromatic ring-containing diisocyanates such as 1,2-phenylene diisocyanate, 1,3-phenylene diisocyanate, 1,4-phenylene diisocyanate, tolylene-2,3-diisocyanate, tolylene-2,4-diisocyanate, tolylene-2,5-diisocyanate, tolylene-2,6-diisocyanate, tolylene-3,4-diisocyanate, tolylene-3,5-diisocyanate, 1,2-bis(isocyanatomethyl)benzene, 1,3-bis(isocyanatomethyl)benzene, 1,4-bis(isocyanatomethyl) benzene, 2,4-diisocyanatobiphenyl, 2,6-diisocyanatobiphenyl, 2,2'-diisocyanatobiphenyl, 3,3'-diisocyanatobiphenyl, 4,4'-diisocyanato-2-methylbiphenyl, 4,4'-diisocyanato-3-methylbiphenyl, 4,4'-diisocyanato-3,3'-dimethylbiphenyl, 4,4'-diisocyanatodiphenylmethane, 4,4'-diisocyanato-2-methyldiphenylmethane, 4,4'-diisocyanato-3-methyldiphenylmethane, 4,4'-diisocyanato-3,3'-dimethyldiphenylmethane, 1,5-diisocyanatonaphthalene, 1,8-diisocyanatonaphthalene, 2,3-diisocyanatonaphthalene, 1, 5-bis(isocyanatomethyl)naphthalene, 1,8-bis(isocyanatomethyl)naphthalene, 2,3-bis(isocyanatomethyl)naphthalene, etc.

Of those, preferred are:
linear polymethylene diisocyanates such as ethylene diisocyanate, trimethylene diisocyanate, tetramethylene diisocyanate, pentamethylene diisocyanate, hexamethylene diisocyanate, heptamethylene diisocyanate, octamethylene diisocyanate, decamethylene diisocyanate, dodecamethylene diisocyanate, tetradecamethylene diisocyanate, etc.;
branched alkylene diisocyanates such as 1-methylhexamethylene diisocyanate, 2-methylhexamethylene diisocyanate, 3-methylhexamethylene diisocyanate, 1,1-dimethylhexamethylene diisocyanate, 1,2-dimethylhexamethylene diisocyanate, 1,3-dimethylhexamethylene diisocyanate, 1,4-dimethylhexamethylene diisocyanate, 1,5-dimethylhexamethylene diisocyanate, 1,6-dimethylhexamethylene diisocyanate, 1,2,3-trimethylhexamethylene diisocyanate, etc.;
cycloalkane ring-containing diisocyanates such as 1,2-diisocyanatocyclopentane, 1,3-diisocyanatocyclopentane, 1,2-diisocyanatocyclohexane, 1,3-diisocyanatocyclohexane, 1,4-diisocyanatocyclohexane, 1,2-bis(isocyanatomethyl)cyclohexane, 1,3-bis(isocyanatomethyl)cyclohexane, 1,4-bis(isocyanatomethyl)cyclohexane, dicyclohexylmethane-2,2'-diisocyanate, dicyclohexylmethane-2,4'-diisocyanate, dicyclohexylmethane-3,3'-diisocyanate, dicyclohexylmethane-4,4'-diisocyanate, etc.

Further, especially preferred are:
linear polymethylene diisocyanates selected from tetramethylene diisocyanate, pentamethylene diisocyanate, hexamethylene diisocyanate, heptamethylene diisocyanate, octamethylene diisocyanate;
cycloalkane ring-containing diisocyanates selected from 1,2-diisocyanatocyclopentane, 1,3-diisocyanatocyclopentane, 1,2-diisocyanatocyclohexane, 1,3-diisocyanatocyclohexane, 1,4-diisocyanatocyclohexane, 1,2-bis(isocyanatomethyl)cyclohexane, 1,3-bis(isocyanatomethyl)cyclohexane, 4-bis(isocyanatomethyl)cyclohexane, dicyclohexylmethane-2,2'-diisocyanate, dicyclohexylmethane-2,4'-diisocyanate, dicyclohexylmethane-3,3'-diisocyanate, dicyclohexylmethane-4,4'-diisocyanate.

One alone or two or more of the above-mentioned isocyanate group-having compounds may be used in the present invention either singly or as combined in any desired manner and in any desired ratio.

In case where the nonaqueous electrolytic solution in the present invention contains a diisocyanate, the content thereof may be generally at least 0.001% by mass relative to the entire mass of the nonaqueous electrolytic solution, preferably at least 0.01% by mass, more preferably at least 0.1% by mass, even more preferably at least 0.3% by mass, and is generally at most 10% by mass, preferably at most 5% by mass, more preferably at most 3% by mass, even more preferably at most 2% by mass. When the content falls within the above-mentioned range, then the durability of cycle characteristics and storage characteristics can be improved and the present invention can sufficiently exhibit the advantageous effects thereof.

The production method for the isocyanate group-having compounds is not specifically defined, and for the compound production, any known method may be selected in any desired manner.

### [5.7 Overcharge Preventing Agent]

The nonaqueous electrolytic solution in the present invention may contain an overcharge preventing agent, for the purpose of effectively preventing the nonaqueous electrolytic solution secondary battery from being ruptured or ignited when overcharged.

The overcharge preventing agent includes:
aromatic compounds such as biphenyl, alkylbiphenyl, terphenyl, partially-hydrogenated terphenyl, cyclohexylbenzene, t-butylbenzene, t-amylbenzene, diphenyl ether, dibenzofuran, etc.;
partially-fluorinated derivatives of the above-mentioned aromatic compounds, such as 2-fluorobiphenyl, o-cyclohexylfluorobenzene, p-cyclohexylfluorobenzene, etc.;
fluorine-containing anisole compounds such as 2,4-difluoroanisole, 2,5-difluoroanisole, 2,6-difluoroanisole, 3,5-difluoroanisole, etc.

Above all, preferred are aromatic compounds such as biphenyl, alkylbiphenyl, terphenyl, partially-hydrogenated terphenyl, cyclohexylbenzene, t-butylbenzene, t-amylbenzene, diphenyl ether, dibenzofuran, etc. One alone or two or more of these may be used here either singly or as combined.

In case where two or more are used as combined, especially preferred is use of a combination of cyclohexylbenzene and t-butylbenzene or t-amylbenzene, or a combination of at least one selected from oxygen-free aromatic compounds such as from biphenyl, alkylbiphenyl, terphenyl, partially-hydrogenated terphenyl, cyclohexylbenzene, t-butylbenzene, t-amylbenzene and the like, and at least one selected from oxygen-containing aromatic compounds such as diphenyl ether, dibenzofuran and the like, from the viewpoint of the balance between overcharge preventing characteristics and high-temperature storage characteristics.

Not specifically defined, the content of the overcharge preventing agent may be any one not markedly detracting from the advantageous effects of the present invention. The content of the overcharge preventing agent is preferably at least 0.1% by mass in 100% by mass of the nonaqueous electrolytic solution and is preferably at most 5% by mass. Falling within the range, the overcharge preventing agent can readily express the effect thereof, and can readily evade a risk of battery performance degradation of, for example, worsening high-temperature storage characteristics of batteries. More preferably, the content of the overcharge preventing agent is at least 0.2% by mass, even more preferably at least 0.3% by mass, still more preferably at least 0.5% by mass, and is also more preferably at most 3% by mass, even more preferably at most 2% by mass.

### [5.8 Other Auxiliary Agents]

The nonaqueous electrolytic solution in the present invention may contain any other known auxiliary agent.

The other auxiliary agent includes:
carbonate compounds such as erythritan carbonate, spiro-bis-dimethylene carbonate, methoxyethyl-methyl carbonate, etc.;
spiro compounds such as 2,4,8,10-tetroxaspiro[5.5]undecane, 3,9-divinyl-2,4,8,10-tetroxaspiro[5.5]undecane, etc.;
sulfur-containing compounds such as ethylene sulfite, methyl fluorosulfonate, ethyl fluorosulfonate, methyl methanesulfonate, ethyl methanesulfonate, methyl ethanesulfonate, ethyl ethanesulfonate, busulfan, sulfolene, diphenyl sulfone, N,N-dimethylmethanesulfonamide, N,N-diethymethanesulfonamide, etc.;
nitrogen-containing compounds such as 1-methyl-2-pyrrolidinone, 1-methyl-2-piperidone, 3-methyl-2-oxazolidinone, 1,3-dimethyl-2-imidazolidinone, N-methylsuccinimide, etc.;
hydrocarbon compounds such as heptane, octane, nonane, decane, cycloheptane, etc.;
fluorine-containing aromatic compounds such as fluorobenzene, difluorobenzene, hexafluorobenzene, benzotrifluoride, etc.;
phosphorus-containing compounds such as methyl dimethylphosphinate, ethyl dimethylphosphinate, ethyl diethylphosphinate, trimethyl phosphonoformate, triethyl phosphonoformate, trimethyl phosphonoacetate, triethyl phosphonoacetate, trimethyl 3-phosphonopropionate, triethyl 3-phosphonopropionate, etc.

One alone or two or more of these may be used here either singly or as combined. Adding the auxiliary agent improves capacity retention characteristics and cycle characteristics after storage at high temperatures.

Of the above, especially preferred are sulfur-containing compounds such as ethylene sulfite, methyl fluorosulfonate, methyl methanesulfonate, methyl ethanesulfonate, ethyl methanesulfonate, busulfan, 1,4-butanediol bis(2,2,2-trifluoroethanesulfonate), etc., as the effect thereof for improving capacity retention characteristics and cycle characteristics after high-temperature storage is great.

Not specifically defined, the content of the other auxiliary agent may be any desired one not markedly detracting from the advantageous effects of the present invention. The content of the other auxiliary agent is preferably at least 0.01% by mass in 100% by mass of the nonaqueous electrolytic solution, and is preferably at most 5% by mass. Falling within the range, the other auxiliary agent can readily express the effect thereof, and can readily evade a risk of battery performance degradation of, for example, worsening high-load discharge characteristics of batteries. More preferably, the content of the other auxiliary agent is at least 0.1 % by mass, even more preferably at least 0.2% by mass, and is more preferably at most 3% by mass, even more preferably at most 1% by mass.

The nonaqueous electrolytic solution described in the above includes one that exists inside the nonaqueous electrolytic solution secondary battery of the present invention. Concretely, the nonaqueous electrolytic solution includes an embodiment of a nonaqueous electrolytic solution in a nonaqueous electrolytic solution secondary battery, which is constructed by separately preparing constituent elements of a nonaqueous electrolytic solution such as a lithium salt, a solvent, an auxiliary agent and the like, followed by substantially isolating them and combining them to prepare a nonaqueous electrolytic solution, and then injecting the thus-prepared nonaqueous electrolytic solution into a battery that has been separately assembled according to the method descried below; an embodiment of producing the same composition as that of the nonaqueous electrolytic solution in the present invention by individually putting the constituent elements of the nonaqueous electrolytic solution in a battery followed by mixing them in the battery; and further an embodiment of producing the same composition as that of the nonaqueous electrolytic solution in the present invention by generating the compounds constituting the nonaqueous electrolytic solution in the nonaqueous electrolytic solution secondary battery.

### [II. Negative Electrode]

The negative electrode active material for use for the negative electrode is described below. Not specifically defined, the negative electrode active material may be any one capable of occluding and releasing a lithium ion at a potential nobler than 1.0 V (vs. Li/Li⁺) wherein the negative electrode active material is a lithium titanium composite oxide.

One alone or two or more types of those materials may be used here either singly or as combined in any desired manner. Unless otherwise specifically defined hereinafter in this description, the potential standard is based on the equilibrium potential of Li/Li⁺.

### [1. Negative Electrode Active Material]

From the viewpoint of high-current density charge-discharge characteristics,
a lithium and titanium composite oxide is used (hereinafter this may be abbreviated as "lithium titanium composite oxide"). Specifically, using a lithium titanium composite oxide having a spinel structure in the negative electrode active material for nonaqueous electrolytic solution secondary batteries is especially preferred as capable of greatly reducing the output resistance.

Also preferred is use of a lithium titanium composite oxide, in which any of lithium and titanium is substituted with any other metal element, for example, with at least one element selected from a group consisting of Na, Mg, K, Al, Si, Cr, Fe, Co, Cu, Zn, Ga, Zr and Nb. Above all, as the case may be, more preferred is the composite oxide substituted with at least one element selected from a group consisting of Mg, Al, Si, Cu, Zn, Zr and Nb.

The metal oxide is preferably a lithium titanium composite oxide represented by the following general formula (A), in which 0.7 ≤ α≤ 1.5, 1.5 ≤ β ≤ 2.3, and 0 ≤ γ ≤ 1.6, since the structure thereof in doping/dedoping with a lithium ion is stable.

Li_{α}Ti_{β}M_{γ}O4 (A)

(In the general formula (A), M represents at least one element selected from a group consisting of Na, Mg, K, Al, Si, Cr, Fe, Co, Cu, Zn, Ga, Zr and Nb.)

Of the composition represented by the above-mentioned general formula (A), especially preferred are the following structures, because of well-balanced battery performance.
(a) 1.2 ≤ α ≤ 1.4, 1.5 ≤ β ≤ 1.7, and γ = 0
(b) 0.9 ≤ α ≤ 1.1, 1.9 ≤ β ≤ 2.1, and γ = 0
(c) 0.7 ≤ α ≤ 0.9, 2.1 ≤ β ≤ 2.3, and γ = 0

Especially preferred typical compositions of the above-mentioned compounds are Li_{4/3}Ti_{5/3}O₄ of (a), Li₁Ti₂O₄ of (b), and Li_{4/5}Ti_{11/5}O₄ of (c). Of the structures where z ≠ 0, for example, preferred is Li_{4/3}Ti_{4/3}Al_{1/3}O₄.

### [2. Negative Electrode Structure and Production Method]

For electrode production, any known method is employable not markedly detracting from the advantageous effects of the present invention. For example, a binder, a solvent and optionally a thickener, a conductive material, a filler and others are added to a negative electrode active material to give a slurry, and this is applied onto a collector, then dried and pressed to give a negative electrode.

### [2.1 Collector]

As the collector to hold the negative electrode active material may be any known one. As the collector of the negative electrode, for example, there may be mentioned metal materials of aluminium, copper, nickel, stainless steel, nickel-plated steel, etc. From the viewpoint of workability and cost, especially preferred are copper and aluminium.

When made of a metallic material, the collector may have a shape of, for example, metal foil, metal column, metal coil, metal plate, thin metal film, expanded metal, punched metal, metal foam or the like. Above all, preferred is a thin metal film, more preferred is a copper foil, and even more preferred is a rolled copper foil produced according to a rolling method or an electrolytic copper foil produced according to an electrolytic method. Any of these is usable here as the collector.

The thickness of the collector is typically 1 µm or more, preferably 5 µm or more, and is typically 100 µm or less, preferably 50 µm or less. When the negative electrode collector is too thick, then the entire capacity of the battery may lower too much, but on the contrary, when too thin, the battery may be difficult to handle.

### [2.2 Thickness Ratio of Collector to Negative Electrode Active Material Layer]

The ratio of the thickness of the collector to that of the negative electrode active material layer is not specifically defined. Preferably, the value of "(thickness of negative electrode active material layer on one side just before nonaqueous electrolytic solution injection)/(thickness of collector)" is 150 or less, more preferably 20 or less, even more preferably 10 or less, and is preferably 0.1 or more, more preferably 0.4 or more, even more preferably 1 or more. When the ratio of the thickness of the negative electrode active material to that of the collector is larger than the above range, then the collector may generate heat though Joule heating during high-current density charging/discharging. On the other hand, when smaller than the range, the volume ratio of the collector to the negative electrode active material may increase and the battery capacity may reduce.

### [2.3 Binder]

Not specifically defined, the binder to bind the negative electrode active material may be any material that is stable against the solvent to be used in nonaqueous electrolytic solution and electrode production.

Specific examples include:
resin polymers such as polyethylene, polypropylene, polyethylene terephthalate, polymethyl methacrylate, aromatic polyamide, polyimide, cellulose, nitrocellulose, etc.;
rubber polymers such as SBR (styrene/butadiene rubber), isoprene rubber, butadiene rubber, fluorine rubber, NBR (acrylonitrile/butadiene rubber), ethylene/propylene rubber, etc.;
styrene/butadiene/styrene block copolymer or its hydrogenated product;
thermoplastic elastomer polymers such as EPDM (ethylene/propylene/diene tercopolymer), styrene/ethylene/butadiene/styrene copolymer, styrene/isoprene/styrene block copolymer or their hydrogenated product, etc.;
soft resin polymers such as syndiotactic 1,2-polybutadiene, polyvinyl acetate, ethylene/vinyl acetate copolymer, propylene/α-olefin copolymer, etc.;
fluoropolymers such as polyvinylidene fluoride, polytetrafluoroethylene, polyfluorovinylidene fluoride, polytetrafluoroethylene/ethylene copolymer, etc.;
polymer compositions having ionic conductivity of alkali metal ion (especially lithium ion), etc. One alone or two or more of these may be used here either singly or as combined in any desired manner and in any desired ratio.

The proportion of the binder to the negative electrode active material is preferably 0.1% by mass or more, more preferably 0.5% by mass or more, even more preferably 0.6% by mass or more, and is preferably 20% by mass or less, more preferably 15% by mass or less, even more preferably 10% by mass or less, still more preferably 8% by mass or less. When the proportion of the binder the negative electrode active material is more than the above range, then the binder amount not contributing toward the battery capacity may increase so that the battery capacity may thereby lower. On the other hand, when less than the above range, the strength of the negative electrode may lower.

In particular, in case where a rubber polymer such as typically SBR is contained as the main ingredient, then the proportion of the binder to the negative electrode active material is typically 0.1% by mass or more, preferably 0.5% by mass or more, more preferably 0.6% by mass or more, and is typically 5% by mass or less, preferably 3% by mass or less, more preferably 2% by mass or less. On the other hand, in case where a fluoropolymer such as typically polyvinylidene fluoride is contained as the main ingredient, then the proportion thereof to the negative electrode active material is typically 1% by mass or more, preferably 2% by mass or more, more preferably 3% by mass or more, and is typically 15% by mass or less, preferably 10% by mass or less, more preferably 8% by mass or less.

### [2.4 Slurry Forming Solvent]

The solvent for slurry formation may be any solvent capable of dissolving or dispersing a negative electrode active material, a binder as well as optional components of a thickener and a conductive material, and the type thereof is not specifically defined. Any of a water-based solvent or an organic solvent may be used here.

Examples of the water-based solvent include water, alcohol, etc.; and examples of the organic solvent include N-methylpyrrolidone (NMP), dimethylformamide, dimethylacetamide, methyl ethyl ketone, cyclohexane, methyl acetate, methyl acrylate, diethyltriamine, N,N-dimethylaminopropylamine, tetrahydrofuran (THF), toluene, acetone, dimethyl ether, dimethylacetamide, hexamethylphosphoramide, dimethyl sulfoxide, benzene, xylene, quinoline, pyridine, methylnaphthalene, hexane, etc. Especially when a water-based solvent is used, it is desirable that a dispersant or the like is additionally contained in the system along with the thickener therein and a latex such as SBR or the like is used for slurry formation. One alone or two or more of these solvents may be used here either singly or as combined in any desired manner and in any desired ratio.

### [2.5 Thickener]

The thickener is generally used for controlling the slurry viscosity. The thickener is not specifically defined. Concretely, there are mentioned carboxymethyl cellulose, methyl cellulose, hydroxymethyl cellulose, ethyl cellulose, polyvinyl alcohol, oxidized starch, phosphorylated starch, casein and their salts, etc. One alone or two or more of these may be used here either singly or as combined in any desired manner and in any desired ratio.

When the thickener is further used, the proportion of the thickener to the negative electrode active material is typically 0.1% by mass or more, preferably 0.5% by mass or more, more preferably 0.6% by mass or more, and is typically 5% by mass or less, preferably 3% by mass or less, even more preferably 2% by mass or less. When the proportion of the thickener to the negative electrode active material is lower than the above range, then the coatability may greatly worsen. On the other hand, when larger than the range, then the proportion of the negative electrode active material in the negative electrode active material layer lowers and therefore, the problem of battery capacity reduction and the interresistance of the negative electrode active material may increase.

### [2.6 Electrode Density]

In electrode formation of the negative electrode active material, the electrode structure is not specifically defined. Preferably, the density of the negative electrode active material existing on the collector is 1 g·cm⁻³ or more, more preferably 1.2 g·cm⁻³ or more, even more preferably 1.3 g·cm⁻³ or more, and is preferably 2.2 g·cm⁻³ or less, more preferably 2.1 g·cm⁻³ or less, even more preferably 2.0 g·cm⁻³ or less, still more preferably 1.9 g·cm⁻³ or less. When the density of the negative electrode active material existing on the collector is more than the above range, then the negative electrode active material particles may be broken thereby often causing a risk of high-current density charge/discharge characteristics degradation owing to initial irreversible capacity increase and nonaqueous electrolytic solution penetrability reduction around the interface of collector/negative electrode active material. When less than the above range, the conductivity of the negative electrode active material may lower and the battery resistance may increase, and therefore the capacity per unit volume may thereby lower.

### [2.7 Thickness of Negative Electrode Plate]

The thickness of the negative electrode plate is designed in accordance with the positive electrode plate to be used, and is not specifically defined. The thickness of the combined layer, from which the thickness of the core metal foil has been subtracted, is generally 15 µm or more, preferably 20 µm or more, more preferably 30 µm or more, and is generally 300 µm or less, preferably 280 µm or less, more preferably 250 µm or less.

### [2.8 Surface Coating of Negative Electrode Plate]

A substance having a composition differing from that of the negative electrode plate may adhere to surface of the negative electrode plate. As the surface-adhering substance, there are mentioned oxides such as aluminium oxide, silicon oxide, titanium oxide, zirconium oxide, magnesium oxide, calcium oxide, boron oxide, antimony oxide, bismuth oxide, etc.; sulfates such as lithium sulfate, sodium sulfate, potassium sulfate, magnesium sulfate, calcium sulfate, aluminium sulfate, etc.; carbonates such as lithium carbonate, calcium carbonate, magnesium carbonate, etc.

### [III. Positive Electrode]

### [1. Positive Electrode Active Material]

The positive electrode active material for use for the positive electrode is described below.

### [1.1 Composition]

Not specifically defined, the positive electrode active material may be any one capable of electrochemically occluding and releasing lithium ions. For example, preferred is a substance containing lithium and at least one transition metal. Specific examples include lithium transition metal composite oxides, and lithium-containing transition metal phosphate compounds.

The transition metal in the lithium transition metal composite oxides is preferably V, Ti, Cr, Mn, Fe, Co, Ni, Cu, etc.; and specific examples include lithium cobalt composite oxides such as LiCoO₂ etc.; lithium nickel composite oxides such as LiNiO₂, etc.; lithium manganese composite oxides such as LiMnO₂, LiMn₂O₄, Li₂MnO₄, etc.; and those produced by partly substituting the transition metal atom that is the basis of the lithium transition metal composite oxides with any other metal of Na, K, B, F, Al, Ti, V, Cr, Mn, Fe, Co, Li, Ni, Cu, Zn, Mg, Ga, Zr, Si, Nb, Mo, Sn, W, etc. Specific examples of the substituted compounds include, for example, LiNi_{0.5}Mn_{0.5}O₂, LiNi_{0.85}Co_{0.10}Al_{0.05}O₂, LiNi_{0.33}Co_{0.33}Mn_{0.33}O₂, LiNi_{0.45}Co_{0.10}Al_{0.45}O₂, LiMn_{1.8}Al_{0.2}O₄, LiMn_{1.5}Ni_{0.5}O₄, etc.

The transition metal in the lithium-containing transition metal phosphate compounds is preferably V, T, Cr, Mn, Fe, Co, Ni, Cu or the like. Specific examples include iron phosphates such as LiFePO₄, L₁₃Fe₂(PO₄)₃, LiFeP₂O₇, etc.; cobalt phosphates such as LiCoPO₄, etc.; those produced by partly substituting the transition metal atom that is the basis of the lithium transition metal phosphate compounds with any other metal such as Al, Ti, V, Cr, Mn, Fe, Co, Li, Ni, Cu, Zn, Mg, Ga, Zr, Nb, Si or the like.

Preferably, lithium phosphate is contained in the positive electrode active material, as improving continuous charging characteristics. Use of lithium phosphate is not defined. Preferably, the positive electrode active material contains lithium phosphate mixed therein. Regarding the amount of the lithium phosphate to be used, the lower limit is preferably 0.1% by mass or more relative to the total of the positive electrode active material and lithium phosphate, more preferably 0.3% by mass or more, even more preferably 0.5% by mass or more, and the upper limit is preferably 10% by mass or less, more preferably 8% by mass or less, even more preferably 5% by mass or less.

### [1.2 Surface Coating]

A substance of which the composition differs from that of the positive electrode active material may adhere to the surface of the positive electrode active material. The surface-adhering substance includes oxides such as aluminium oxide, silicon oxide, titanium oxide, zirconium oxide, magnesium oxide, calcium oxide, boron oxide, antimony oxide, bismuth oxide, etc.; sulfates such as lithium sulfate, sodium sulfate, potassium sulfate, magnesium sulfate, calcium sulfate, aluminium sulfate, etc.; carbonates such as lithium carbonate, calcium carbonate, magnesium carbonate, etc.; carbon, etc.

The surface-adhering substance may be adhered to the surface of the positive electrode active material according to a method of dissolving or suspending the substance in a solvent followed by infiltrating and adding it to a positive electrode active material and drying it, a method of dissolving or suspending a precursor of the surface-adhering substance in a solvent, then infiltrating and adding it to a positive electrode active material and thereafter reacting them by heating, or a method of adding to a precursor of the positive electrode active material and simultaneously firing them. In case where carbon is adhered, there may be employed a method of mechanically adhering a carbonaceous material later on, for example, as an active carbon or the like.

Regarding the amount of the surface-adhering substance, the lower limit of the mass thereof relative to the positive electrode active material is preferably 0.1 ppm or more, more preferably 1 ppm or more, even more preferably 10 ppm or more, and the lower limit is preferably 20% or less, more preferably 10% or less, even more preferably 5% or less. The surface-adhering substance can prevent the oxidation of electrolytic solution on the surface of the positive electrode active material to thereby prolong the battery life. However, when the adhering amount is too small, then the substance could not sufficiently exhibit the effect; but when too large, the substance may interfere with the movement of lithium ions whereby the resistance may increase.

In the present invention, those with such a different substance adhering to the surface of the positive electrode active material fall within the scope of the "positive electrode active material".

### [1.3 Shape]

The positive electrode active material particles may have conventional shapes, such as agglomerate, polyhedron, sphere, oval sphere, plate, needle, column, etc. The primary particles may aggregate and form secondary particles for use herein.

### [1.4 Tap Density]

The tap density of the positive electrode active material is preferably 0.5 g/cm³ or more, more preferably 0.8 g/cm³ or more, even more preferably 1.0 g/cm³ or more. When the tap density of the positive electrode active material is lower than the lower limit, then the necessary dispersant amount in forming the positive electrode active material layer may increase and the necessary amount of the conductive material and the binder may also increase so that the filling rate of the positive electrode active material in the positive electrode active material layer would be thereby limited and the battery capacity may also be limited.

Using a composite oxide powder having a high tap density makes it possible to form a positive electrode active material layer having a high density. Consequently, in general, the tap density is preferably larger, and the upper limit thereof is not specifically defined; however, when too large, then the lithium ion diffusion in the electrolytic solution serving as a medium inside the positive electrode active material layer would be rate-limiting to often worsen load characteristics. Consequently, the upper limit is preferably 4.0 g/cm³ or less, more preferably 3.7 g/cm³ or less, even more preferably 3.5 g/cm³ or less.

In the present invention, the tap density may be measure as follows: From 5 to 10 g of the positive electrode active material sample to be analyzed is put in a 10-ml glass-made measuring cylinder, and tapped 200 times at a stroke of about 20 mm, whereupon the powder packing density (tap density) is measured as g/mL.

### [1.5 Median Size d₅₀]

The median size d₅₀ of the positive electrode active material particles (secondary particle size when the primary particles aggregate and form secondary particles) is preferably 0.3 µm or more, more preferably 0.5 µm or more, even more preferably 0.8 µm or more, most preferably 1.0 µm or more, and the upper limit is preferably 30 µm or less, more preferably 27 µm or less, even more preferably 25 µm or less, most preferably 22 µm or less. When the median size is smaller than the lower limit, then high tap density products could not be obtained. When larger than the upper limit, then a lot of time would be taken for lithium diffusion inside the particles so that the battery characteristics would worsen and there may occur other problems in that, in battery positive electrode formation, or that is, when the active material is formed into slurry along with a conductive material, a binder and others in a solvent and the resulting slurry is applied to form a thin film, then the film may have streaks and the like formed thereon. Here, two or more different types of positive electrode active materials each having a different median size d₅₀ may be mixed to thereby further improve the chargeability in positive electrode formation.

In the present invention, the median size d₅₀ is measured using a known laser diffraction/scattering particle sizer. When HORIBA's LA-920 is used as the particle sizer, an aqueous 0.1 mass% sodium hexametaphosphate is used as the dispersant. After ultrasonic dispersion for 5 minutes, the sample is analyzed at a measurement refractive index set at 1.24.

### [1.6 Average Primary Particle Size]

When the primary particles aggregate and form secondary particles, the average primary particle size of the positive electrode active material is preferably 0.05 µm or more, more preferably 0.1 µm or more, even more preferably 0.2 µm or more, and the upper limit is preferably 5 µm or less, more preferably 4 µm or less, even more preferably 3 µm or less, most preferably 2 µm. When the size is more than the upper limit, then spherical secondary particles would be difficult to form so that the particles may have some negative influence on the powder chargeability and the specific surface area would be thereby markedly reduced and therefore the possibility that the battery performance such as output characteristics and the like may worsen would increase. On the other hand, when the size is less than the lower limit, then, in general, the crystals could grow insufficiently and therefore there may occur a problem of charge/discharge reversibility degradation.

In the present invention, the average primary particle size is measured through scanning electron microscopy (SEM). Concretely, the value of the longest slice of the primary particles on the right and left of the boundary on a horizontal straight line is determined for arbitrary 50 primary particles on the picture taken at a magnification of 10,000 times. The found data are averaged to give a mean value to be the primary particle size.

### [1.7 BET Specific Surface Area]

The BET specific surface area of the positive electrode active material is preferably 0.1 m²/g or more, more preferably 0.2 m²/g or more, even more preferably 0.3 m²/g or more, and the upper limit is 50 m²/g or less, preferably 40 m²/g or less, more preferably 30 m²/g or less. When the BET specific surface area is less than the range, then the battery performance would worsen and the tap density would be difficult to increase so that there may occur a problem of coatability in positive electrode active material layer formation.

In the present invention, the BET specific surface area is defined as a value measured using a surface area meter (for example, Okura Riken's full-automatic surface area measurement device) according to a single-point nitrogen adsorption BET method of a gas flow method, in which the sample to be analyzed is predried in nitrogen circulation at 150°C for 30 minutes and then analyzed therein using a nitrogen/helium mixed gas as accurately controlled to have a relative pressure value of nitrogen to atmospheric pressure of 0.3.

### [1.8 Production Method for Positive Electrode Active Material]

For production of the positive electrode active material, herein employable is an ordinary production method for inorganic compounds. In particular, various methods may be taken into consideration for producing spherical to oval-spherical active materials. For example, one case of the method comprises dissolving or powdery-dispersing a starting substance of a transition metal, then controlling the pH of the system with stirring to give and collect a spherical precursor, optionally drying it, and adding thereto an Li source such as LiOH, Li₂CO₃, LiNO₃ or the like, and firing it at a high temperature to give the intended active material.

For positive electrode production, one alone or two or more different types of the above-mentioned positive electrode active materials may be used either singly or as combined in any desired manner and in any desired ratio. As preferred combinations, there are mentioned a combination of LiCoO₂ with LiMn₂O₄ or one prepared by substituting a part of Mn therein with any other transition metal such as LiNi_{0.33}Co_{0.33}Mn_{0.33}O₂ or the like, and a combination with LiCoO₂ or one prepared by substituting a part of Co therein with any other transition metal.

### [2. Positive Electrode Structure and Production Method]

The structure of the positive electrode is described below. In the present invention, the positive electrode may be provided by forming a positive electrode active material layer containing a positive electrode active material and a binder on a collector. The positive electrode using a positive electrode active material may be formed according to an ordinary method. Briefly, a positive electrode active material and a binder and optionally a conductive material and a thickener are mixed in dry and formed into a sheet, and the sheet is stuck under pressure to a positive electrode collector; or these materials are dissolved or dispersed in a liquid medium to prepare a slurry, and the slurry is applied onto a positive electrode collector and dried to form the positive electrode active material layer on the collector, thereby providing the intended positive electrode.

The content of the positive electrode active material in the positive electrode active material layer is preferably 80% by mass or more, more preferably 82% by mass or more, even more preferably 84% by mass or more. The upper limit is preferably 99% by mass or less, more preferably 98% by mass or less. When the content of the positive electrode active material in the positive electrode active material layer is low, then the electric capacity would be insufficient. On the contrary, when the content is too high, the strength of the positive electrode may be insufficient.

The positive electrode active material layer formed by coating and drying is preferably densified under pressure with a hand press, a roller press or the like for the purpose of increasing the packing density of the positive electrode active material. Regarding the density of the positive electrode active material layer, the lower limit thereof is preferably 1.5 g/cm³ or more, more preferably 2 g/cm³ or more, even more preferably 2.2 g/cm³ or more, and the upper limit thereof is preferably 5 g/cm³ or less, more preferably 4.5 g/cm³ or less, even more preferably 4 g/cm³ or less. When the density is more than the range, then the penetrability of the electrolytic solution into the vicinity of the collector/active material interface would lower, and in particular, the charge/discharge characteristics at a high current density would worsen and a high output could not be realized. When less than the range, then the interconductivity of the active material may lower and the battery resistance may increase so that a high output could not be realized.

### [2.1 Conductive Material]

Any known conductive material is usable here. Specific examples include metal materials of copper, nickel, etc.; and carbonaceous materials, for example, graphite such as natural graphite, artificial graphite, etc., carbon black such as acetylene black, etc., amorphous carbon such as needle coke, etc. One alone or two or more different types of those may be used here either singly or as combined in any desired manner and in any desired ratio.

The conductive material is used here in such a manner that the content thereof in the positive electrode active material layer could be typically 0.01% by mass or more, preferably 0.1% by mass or more, more preferably 1% by mass or more, and the upper limit of the content is typically 50% by mass or less, preferably 30% by mass or less, more preferably 15% by mass or less. When the content is smaller than the above range, then the conductivity would be insufficient. On the other hand, when the content is larger than the range, then the battery capacity may lower.

### [2.2 Binder]

The binder for use for forming the positive electrode active material layer is not specifically defined. In a coating method, the binder may be a material capable of being dissolved or dispersed in the liquid medium used in electrode production. Specific examples of the binder include:
resin polymers such as polyethylene, polypropylene, polyethylene terephthalate, polymethyl methacrylate, polyimide, aromatic polyamide, cellulose, nitrocellulose, etc.;
rubber polymers such as SBR (styrene/butadiene rubber), NBR (acrylonitrile/butadiene rubber), fluorine-containing rubber, isoprene rubber, butadiene rubber, ethylene/propylene rubber, etc.;
thermoplastic elastomer polymers such as styrene/butadiene/styrene block copolymer or its hydrogenated product, EPDM (ethylene/propylene/diene tercopolymer), styrene/ethylene/butadiene/styrene copolymer, styrene/isoprene/styrene block copolymer or their hydrogenated product, etc.;
soft resin polymers such as syndiotactic 1,2-polybutadiene, polyvinyl acetate, ethylene/vinyl acetate copolymer, propylene/α-olefin copolymer, etc.;
fluoropolymers such as polyvinylidene fluoride (PVdF), polytetrafluoroethylene, polyfluorovinylidene fluoride, polytetrafluoroethylene/ethylene copolymer, etc.;
polymer compositions having ionic conductivity of alkali metal ion (especially lithium ion), etc. One alone or two or more of these substances may be used here either singly or as combined in any desired manner and in any desired ratio.

The proportion of the binder in the positive electrode active material layer is typically 0.1% by mass or more, preferably 1% by mass or more, more preferably 1.5% by mass or more, and the upper limit is typically 80% by mass or less, preferably 60% by mass or less, more preferably 40% by mass or less, most preferably 10% by mass or less. When the proportion of the binder is too low, then the layer could not fully hold the positive electrode active material therein and the mechanical strength of the positive electrode would be insufficient so that the battery performance such as cycle characteristics and others would worsen. On the other hand, when too high, then the battery capacity and the conductivity may lower.

### [2.3 Slurry Forming Solvent]

The solvent for slurry formation may be any solvent capable of dissolving or dispersing a positive electrode active material, a conductive material, a binder as well as an optional component of a thickener, and the type thereof is not specifically defined. Any of a water-based solvent or an organic solvent may be used here. Examples of the water-based solvent include water, a mixed solvent of alcohol and water, etc. Examples of the organic solvent include aliphatic hydrocarbons such as hexane, etc.; aromatic hydrocarbons such as benzene, toluene, xylene, methylnaphthalene, etc.; heterocyclic compounds such as quinoline, pyridine, etc.; ketones such as acetone, methyl ethyl ketone, cyclohexanone, etc.; esters such as methyl acetate, methyl acrylate, etc.; amines such as diethylenetriamine, N,N-dimethylaminopropylamine, etc.; ethers such as diethyl ether, propylene oxide, tetrahydrofuran (THF), etc.; amides such as N-methylpyrrolidone (NMP), dimethylformamide, dimethylacetamide, etc.; aprotic polar solvents such as hexamethylphosphoramide, dimethyl sulfoxide, etc.

Especially when a water-based medium is used, it is desirable to use a thickener and a latex such as styrene-butadiene rubber (SBR) to form a slurry. The thickener is used generally for controlling the slurry viscosity. The thickener is not specifically defined. Concretely, there are mentioned carboxymethyl cellulose, methyl cellulose, hydroxymethyl cellulose, ethyl cellulose, polyvinyl alcohol, oxidized starch, phosphorylated starch, casein and their salts, etc. One alone or two or more of these may be used here either singly or as combined in any desired manner and in any desired ratio.

In case where the thickener is added, the proportion of the thickener to the active material may be 0.1% by mass or more, preferably 0.2% by mass or more, more preferably 0.3% by mass or more, and the upper limit may be 5% by mass or less, preferably 3% by mass or less, more preferably 2% by mass or less. When lower than the range, then the coatability would markedly worsen. When higher than the range, then the proportion of the active material in the positive electrode active material layer may lower and therefore, as the case may be, the battery capacity may lower or the interresistance of the positive electrode active material may increase.

### [2.4 Collector]

Not specifically defined, any known material may be used for the positive electrode collector. Specific examples of the material include metal materials of aluminium, stainless steel, nickel plating, titanium, tantalum or the like; and carbon materials such as carbon cloth, carbon paper, etc. Above all, preferred are metal materials, especially aluminium.

The shape of the collector is described. When made of a metallic material, the collector may have a shape of metal foil, metal column, metal coil, metal plate, thin metal film, expanded metal, punched metal, metal foam or the like. When made of a carbon material, there are mentioned carbon plate, carbon thin film, carbon column, etc. Of those, preferred is a metal thin film. The thin film may be a mesh film. The thickness of the thin film may be any arbitrary one. In general, the thickness is 1 µm or more, preferably 3 µm or more, more preferably 5 µm or more, and the upper limit thereof is generally 1 mm or less, preferably 100 µm or less, more preferably 50 µm or less. When the thin film is thinner than the range, then the strength thereof necessary for collector would be insufficient. On the contrary, when thicker than the range, the thin film would lose good handleability.

Also preferably, the surface of the collector is coated with a conductive auxiliary agent from the viewpoint of lowering the electronic contact resistance between the collector and the positive electrode active material layer. The conductive auxiliary agent includes carbon and noble metals such as gold, platinum, silver, etc.

The ratio of the thickness of the positive electrode active material layer to that of the collector (thickness of positive electrode active material layer on one side just before injection of electrolytic solution)/(thickness of collector) is preferably 20 or less, more preferably 15 or less, most preferably 10 or less, and the lower limit thereof is preferably 0.5 or more, more preferably 0.8 or more, most preferably 1 or more. When the ratio is more than the range, then the collector may be heated owing to Joule heat during high-current density charging/discharging. When less than the range, then the ratio by volume of the collector to the positive electrode active material may increase and the battery capacity may reduce.

### [2.5 Electrode Surface]

In case where the nonaqueous electrolytic solution in the present invention is used, it is desirable that the area of the positive electrode active material layer is large relative to the outer surface area of the battery packaging case from the viewpoint of increasing the stability at high output and high temperature. Concretely, it is desirable that the areal ratio of the sum total of the electrode area of the positive electrode relative to the surface area of the outer package of the secondary battery is 15 times or more, more preferably 40 times or more.

The outer surface area of the outer packaging case, which has a bottomed square shape, indicates the total surface to be calculated from the dimension of the length, the width and the thickness of the case part packed with power-generating elements but excluding the projection part of the terminal. In the case of a bottomed cylindrical shape, the outer surface area indicates the geometric surface area as calculated by approximating the case part packed with power-generating elements but excluding the projection part of the terminal, as a cylinder. The sum total of the electrode surface of the positive electrode indicates the geometric surface area of the positive electrode composite layer facing to the composite layer containing a negative electrode active material, and in the structure where the positive electrode composite layer is formed on both sides via a collector foil put therebetween, each surface is separately calculated, and the resultant data are summed up to give the sum total of the electrode area.

### [2.6 Thickness of Positive Electrode Plate]

The thickness of the positive electrode plate is not specifically defined. From the viewpoint of realizing high capacity and high output, the thickness of the composite layer to be calculated by subtracting the thickness of the metal foil of the core is, as the lower limit thereof, preferably 10 µm or more on one surface of the collector, more preferably 20 µm or more, and the upper limit is preferably 500 µm or less, more preferably 450 µm or less.

### [2.7 Surface Coating of Positive Electrode Plate]

A substance having a composition differing from that of the positive electrode plate may adhere to the surface of the positive electrode plate for use herein. The surface-adhering substance includes oxides such as aluminium oxide, silicon oxide, titanium oxide, zirconium oxide, magnesium oxide, calcium oxide, boron oxide, antimony oxide, bismuth oxide, etc.; sulfates such as lithium sulfate, sodium sulfate, potassium sulfate, magnesium sulfate, calcium sulfate, aluminium sulfate, etc.; carbonates such as lithium carbonate, calcium carbonate, magnesium carbonate, etc.; carbon, etc.

### [IV. Separator]

In the nonaqueous electrolytic solution secondary battery of the present invention, a separator is interposed between the positive electrode and the negative electrode to prevent short circuit. In this case, in general, the separator is impregnated with the nonaqueous electrolytic solution of the present invention.

The material and the shape of the separator are not specifically defined, for which any known ones may be employed here not markedly detracting from the advantageous effects of the present invention. Above all, in the present invention, polyolefin resins, resins with an inorganic substance dispersed therein, other resins, glass fibers or the like that are formed of a material stable for the nonaqueous electrolytic solution in the present invention are usable as the constituent component. Regarding the shape, preferred is use of a porous sheet, a nonwoven fabric or the like excellent in liquid retentivity.

### [1. Type of Separator]

The separator for use in the present invention may have a polyolefin resin as a part of the constituent component thereof. Here, the polyolefin resin concretely includes a polyethylene resin, a polypropylene resin, a 1-polymethylpentene, etc.

Examples of the polyethylene resin include a low-density polyethylene, a linear low-density polyethylene, a linear ultralow-density polyethylene, a middle-density polyethylene, a high-density polyethylene, and a copolymer comprising ethylene as the main ingredient, or that is, a copolymer or a polynary copolymer or a mixed composition of ethylene with one or more comonomers selected from an α-olefin having from 3 to 10 carbon atoms, such as propylene, 1-butene, 1-pentene, 1-hexene, 1-heptene, 1-octene, etc.; a vinyl ester such as vinyl acetate, vinyl propionate, etc.; an unsaturated carboxylate such as methyl acrylate, ethyl acrylate, methyl methacrylate, ethyl methacrylate, etc.; or an unsaturated compound such as a conjugated diene or nonconjugated diene. The ethylene unit content in the ethylene copolymer is generally more than 50% by mass.

Of those polyethylene resins, preferred is at least one polyethylene resin selected from a low-density polyethylene, a linear low-density polyethylene and a high-density polyethylene, and most preferred is a high-density polyethylene.

The polymerization catalyst for the polyethylene resin is not specifically defined. Any of a Ziegler catalyst, a Phillips catalyst, a Kaminsky catalyst or the like is usable. The polymerization mode for production of the polyethylene resin includes single-stage polymerization, two-stage polymerization or more multistate polymerization, etc. Any of those modes is employable for the polyethylene resin for use herein.

The melt flow rate (MFR) of the polyethylene resin is not specifically defined, but is, in general, preferably from 0.03 to 15 g/10 min, more preferably from 0.3 to 10 g/10 min. When MFR falls within the above range, the back pressure of the extruder for use in shaping would not be too high and therefore the producibility is excellent. In the present invention, MFR indicates the value measured according to JIS K7210 (1999) at a temperature of 190°C and under a load of 2.16 kg.

The production method for the polyethylene resin is not specifically defined, for which any known polymerization using a known olefin polymerization catalyst is usable. For example, there is mentioned a polymerization method using a multisite catalyst such as typically a Ziegler-Natta catalyst, or a single site catalyst such as typically a metallocene catalyst.

Next described are examples of the polypropylene resin. The polypropylene resin for use in the present invention includes homopolypropylene (propylene homopolymer), and a random copolymer or a block copolymer of propylene with an α-olefin such as ethylene, 1-butene, 1-pentene, 1-hexene, 1-heptene, 1-octene, 1-nonene, 1-decene or the like. Of those, more preferred is homopolypropylene for use for battery separators, from the viewpoint of the mechanical strength thereof.

As the polypropylene resin, preferred is one having an isotactic pentad fraction indicating stereoregularity of from 80 to 99%, more preferably from 83 to 98%, even more preferably from 85 to 97%. When the isotactic pentad fraction is too low, then the mechanical strength of the battery separator would low. On the other hand, the upper limit of the isotactic pentad fraction is defined as the upper limit thereof industrially available at present, but in future, this would not apply to the case where a resin having a higher regularity could be developed on the industrial level.

The isotactic pentad fraction means the steric structure in which five methyl groups of the side chain are all positioned in the same direction relative to the main chain of carbon-carbon bonds composed of arbitrarily continuing five propylene units, or the proportion thereof. The attribution of the signal in the methyl group region is in accordance with A. Zambellietatal. (Macromol. 8,687 (1975)).

Of the polypropylene resin for use herein, Mw/Mn that is a parameter indicating the molecular weight distribution thereof is preferably from 1.5 to 10.0, more preferably 2.0 to 8.0, even more preferably from 2.0 to 6.0. A smaller value of Mw/Mn means that the molecular weight distribution of the resin is narrower. When Mw/Mn is less than 1.5, then the extrusion moldability of the resin may worsen, and in addition, the industrial production thereof would be diffcult. On the other hand, when Mw/Mn is more than 10.0, then the low-molecular-weight component would increase and the mechanical strength of the battery separator to be obtained tends to lower. Mw/Mn is measured through GPC (gel permeation chromatography).

The melt flow rate (MFR) of the polypropylene resin is not specifically defined. In general, MFR is preferably from 0.1 to 15 g/10 min, more preferably from 0.5 to 10 g/10 min. When MFR is less than 0.1 g/10 min, then the melt viscosity of the resin in shaping would be high and the producibility would lower. On the other hand, when more than 15 g/10 min, then there may occur some problems in practical use, for example, the strength of battery separators would be poor. MFR is measured according to JIS K7210 (1999) at a temperature of 230°C and under a load of 2.16 kg.

The separator for use in the present invention may be a resin separator with an inorganic substance dispersed therein. The inorganic substance is not specifically defined so far as it does not interfere with battery reaction, and includes, for example, titanium oxide, silicon oxide, barium oxide, aluminium oxide, magnesium oxide, potassium oxide, silicon oxide, potassium titanate, magnesium potassium titanate, barium titanate, tin oxide, zinc oxide, tantalum, kaolinite, montmorillonite, mica, calcium carbonate, zirconia, lithium phosphate titanate, etc. The metal constituting these compound may be substituted with any other metal element, for example, with at least one element selected from a group consisting of Na, Mg, K, Al, Si, Cr, Fe, Co, Cu, Zn, Ga, Zr and Nb. One alone or two or more different types of these inorganic substances may be used here either singly or as combined. Not interfering with battery reaction, the inorganic substance may be surface-treated according to a known method.

The shape of the inorganic substance is not specifically defined, and may be spherical, tabular, fibrous or in any other amorphous form, or a mixture of those.

The resin for use for dispersion includes:
resin polymers such as polyethylene, polypropylene, polyethylene terephthalate, polymethyl methacrylate, polyimide, aromatic polyamide, cellulose, nitrocellulose, etc.;
rubber polymers such as SBR (styrene/butadiene rubber), NBR (acrylonitrile/butadiene rubber), fluorine-containing rubber, isoprene rubber, butadiene rubber, ethylene/propylene rubber, etc.;
thermoplastic elastomer polymers such as styrene/butadiene/styrene block copolymer or its hydrogenated product, EPDM (ethylene/propylene/diene tercopolymer), styrene/ethylene/butadiene/ethylene copolymer, styrene/isoprene/styrene block copolymer or their hydrogenated product, etc.;
soft resin polymers such as syndiotactic 1,2-polybutadiene, polyvinyl acetate, ethylene/vinyl acetate copolymer, propylene/α-olefin copolymer, etc.;
fluoropolymers such as polyvinylidene fluoride (PVdF), polytetrafluoroethylene, polyfluorovinylidene fluoride, polytetrafluoroethylene/ethylene copolymer, etc.;
polymer compositions having ionic conductivity of alkali metal ion (especially lithium ion), etc. One alone or two or more of these substances may be used here either singly or as combined in any desired manner and in any desired ratio.

As the material for the separator of other resins or glass fibers, for example, usable along with the above-mentioned polyolefin resin are aromatic polyamide, polytetrafluoroethylene, polyether sulfone, glass filter, etc. One alone or two or more of these materials may be used here either singly or as combined in any desired manner and in any desired ratio.

### [2. Shape of Separator]

The thickness of the separator may be any one, and is typically 1 µm or more, preferably 5 µm or more, more preferably 8 µm or more, and is typically 50 µm or less, preferably 40 µm or less, more preferably 30 µm or less. When the separator is thinner than the above range, then the insulation quality and the mechanical strength may lower. On the other hand, when thicker than the range, not only the battery performance such as rate characteristics and others may worsen but also the energy density as a whole of the nonaqueous electrolytic solution secondary battery may lower.

Further, in case where a porous substance such as a porous sheet, a nonwoven fabric or the like is used as the separator, the porosity of the separator may be any one, but is typically 20% or more, preferably 35% or more, more preferably 45% or more, and is typically 90% or less, preferably 85% or less, more preferably 75% or less. When the porosity is smaller than the above range, then the film resistance may increase and the rate characteristics may thereby worsen. On the other hand, when larger than the range, then the mechanical strength of the separator may lower and the insulating quality thereof may thereby lower.

The mean pore size of the separator may also be any one, but is typically 0.5 µm or less, preferably 0.2 µm or less, and is typically 0.05 µm or more. When the mean pore size is larger than the above range, then the battery may readily provide short circuit. When smaller than the range, then the film resistance may increase and the rate characteristics may thereby worsen.

On the other hand, the inorganic material for use for the separator includes, for example, oxides such as alumina, silicon dioxide, etc.; nitrides such as aluminium nitride, silicon nitride, etc.; sulfates such as barium sulfate, calcium sulfate, etc.; and those materials that are granular or fibrous ones are usable here.

Regarding the shape thereof, the separator may be in a form of a thin film such as nonwoven fabric, woven fabric, microporous film, etc. Of the thin-film separator, preferably, the pore size is from 0.01 to 1 µm, and the thickness is from 5 to 50 µm.

Apart from the above-mentioned independent thin film-like separator, a composite porous layer that contains particles of the above-mentioned inorganic material and functions as the separator may be formed on the surface layer of the positive electrode and/or the negative electrode, using a resinous binder. For example, a porous layer of alumina particles of which the 90% particle size (mean particle size d90) is less than 1 µm may be formed on both surfaces of the positive electrode, using a fluororesin as a binder.

### <V Battery Design>

### [1. Electrode Group]

The electrode group may be any of a laminate structure of the positive electrode plate and the negative electrode plate with the separator placed therebetween, or a wound structure of the positive electrode plate and the negative electrode plate with the separator placed therebetween. The volume proportion of the electrode group in the battery (hereinafter referred to as "electrode group occupancy") is typically 40% or more, preferably 50% or more, and is typically 90% or less, preferably 80% or less.

When the electrode group occupancy is smaller than the above range, then the battery capacity may be small. When larger than the range, then the void space would be small and the battery may be at high temperatures, therefore providing problems in that the constituent members may expand, the liquid component of the electrolyte may have an increased vapor pressure so that the internal pressure of battery may increase, whereby the properties such as the charge/discharge repeat performance, high-temperature storage stability and the like of battery may worsen and, further, the gas release valve to release the internal pressure outside may start to act.

### [2. Collector Structure]

The collector structure is not specifically defined. However, for more effectively realizing the improvement of the charge/discharge characteristics at a high-current density by the nonaqueous electrolytic solution of the present invention, it is desirable that the collector is so designed that the resistance in the wiring part and the bonding part could be reduced. When the internal resistance is reduced in that manner, the effect in using the nonaqueous electrolytic solution of the invention could be exhibited more favorably.

When the electrode group has a laminate structure such as above, the structure preferably involves welding of a bundle of the metal core portions of the electrode layers to the terminal. Because the internal resistance increases when the single electrode area has a large area, it is also preferable to reduce the resistance by providing multiple terminals in the electrode. When the electrode group has a wound structure such as above, multiple lead structures may be provided for each of the positive electrode and the negative electrode, and these structures may be bounded to the terminal to reduce the internal resistance.

### [3. Outer Packaging Case]

The material of the outer packaging case is not specifically defined so far as it is a stable material for the nonaqueous electrolytic solution to be used. Specifically, examples of the material include metals such as nickel-plated steel plates, stainless steel, aluminium or aluminium alloys, magnesium alloys, etc.; and laminate films of resin and aluminium film. Of these, in view of weight saving, a metal of aluminium or aluminium alloy, or a laminate film is preferred.

For the outer packing case using a metal, there may be mentioned one forming an airtightly sealed structure by welding metals to each other by laser welding, resistance welding, or ultrasonic welding, or one forming a crimped structure through a resin-made gasket using the above metal. For the outer packaging case using a laminate film such as above, there may be mentioned one forming an airtightly sealed structure by heat-sealing resin layers with each other.

For increasing the sealability, a resin different from the resin used in the laminate film may be arranged between the above resin layers. Particularly, in a case where the resin layers are heat-sealed via a collector terminal to form a sealed structure, the jointing is between metal and resin, and therefore the interposing resin is preferably a resin having a polar group or a modified resin with a polar group introduced thereinto.

### [4. Protection Device]

The protection device may be, for example, PTC (positive temperature coefficient) in which the resistance increases when an abnormal heat is generated or an over current flows, a thermal fuse, a thermistor, a valve (current breaker valve) that shuts off the current flowing in the circuit through sharp increase in the inner pressure or the inner temperature of the battery at the time of abnormal heat generation, or the like. As the above protection device, it is preferred to select one that does not act as usual use under high current. More preferred is a design which does not result in abnormal heat generation or thermal runaway even when the protection device is not present.

### [5. Outer Package]

The nonaqueous electrolytic solution secondary battery of the present invention is usually composed by housing the above-mentioned nonaqueous electrolytic solution, negative electrode, positive electrode, separator and others in an outer package. The outer package is not specifically defined, and any known outer package may be used not markedly detracting from the advantageous effects of the present invention. Concretely, the material of the outer package may be any one. In general, however, usable are nickel-plated iron, stainless steel, aluminium or its alloy, nickel, titanium, etc.

The outer package may have any shape, and may be, for example, cylindrical, rectangular, laminar, coin-shaped or large-sized.

### Examples

The present invention is described more concretely with reference to the following Examples and Comparative Examples; however, the present invention is not limited to these Examples.

Evaluation methods for the lithium secondary batteries produced in the following Examples and Comparative Examples are shown below.

### [Pre-conditioning Interim Operation]

The produced lithium secondary battery was, as kept sandwiched between glass plates for increasing the adhesiveness between the electrodes therein, subjected to pre-conditioning interim operation at 25°C and at a constant current corresponding to 0.2 C. Here, 1 C indicates the current value for discharging the reference capacity of a battery for 1 hour, and 2 C is the current value of two times that of 1 C, and 0.2 C is the current value of 1/5 of 1 C.

### [Storage Test]

After the pre-conditioning interim operation, the lithium secondary battery was charged to 2.7 V, and stored at 60°C for 1 week. Before and after the storage, the volume of the battery was measured according to the Archimedes method, and the value of [(volume after storage - volume before storage)/(volume before storage) x 100] was calculated. The evaluation results in Tables 1 to 3 are the numerical values relative to the reference value, 100, of Comparative Example A-1, Reference Example B-2 and Comparative Example C-1.

### [Discharge 10 C Rate Test]

After the pre-conditioning interim operation, the lithium secondary battery was charged to 2.7 V and then discharged at 10 C, and the resultant value was referred to as 10 C discharge capacity (mAh). The produced lithium secondary battery was so standardized that the discharge capacity thereof at 0.2 C could be about 34 mAh.

### <Test Example A>

### (Example A-1)

### [Production of Negative Electrode]

As a negative electrode active material, a lithium titanium composite oxide was used, and a negative electrode comprising lithium titanium composite oxide/conductive auxiliary agent/binder at 91/4/5 (by mass) was produced according to the method shown in the description. The potential at which the lithium titanium composite oxide used here occludes and releases lithium ions is from 1.2 to 2.0 V (vs. Li/Li⁺). In all of Examples A-1 to A-7 and Comparative Examples A-1 to A-4, the same negative electrode was used.

### [Production of Positive Electrode]

As a positive electrode active material, 92% by mass of lithium cobalt nickel manganese oxide (LiNi_{1/3}Co_{1/3}Mn_{1/3}O₂), as a conductive material, 5% by mass of acetylene black, and as a binder, 3% by mass of polyvinylidene fluoride (PVdF) were mixed in a solvent N-methylpyrrolidone using a disperser to give a slurry. This was uniformly applied on both surfaces of an aluminium foil, dried, and then pressed to give a positive electrode. In all of Examples A-1 to A-7 and Comparative Examples A-1 to A-4, the same positive electrode was used.

### [Production of Nonaqueous Electrolytic Solution]

In a dry argon atmosphere, dry LiPF₆ was dissolved in a mixed solvent of ethylene carbonate (EC) and diethyl carbonate (DEC) (3/7 by volume) in a ratio of 1 mol/L, and an additive succinic anhydride (SUC) was added thereto so that the content of the additive in the nonaqueous electrolytic solution could be 0.5% by mass, and mixed to prepare an electrolytic solution.

### [Production of Nonaqueous Electrolytic Solution Secondary Battery]

The negative electrode, a separator and the positive electrodes were laminated to produce a battery cell. The battery cell was inserted into a bag of a laminate film coated with aluminium on both surfaces thereof, with the terminals of the positive electrode and the negative electrode kept penetrating therethrough. The electrolytic solution prepared in the above was injected into the bag, and then sealed up in vacuum to produce a sheet battery. For evaluation of the gas generation amount and the discharge characteristics thereof, the thus-produced nonaqueous electrolytic solution secondary battery was tested according to the storage test and the discharge 10 C rate test mentioned above. The evaluation results are shown in Table 1.

### (Example A-2) (Reference Example)

In the same manner as in Example A-1 except that, in the electrolytic solution in Example A-1, the content of SUC was changed to 1.0% by mass, a nonaqueous electrolytic solution was prepared and a sheet battery was produced. The gas generation amount and the discharge characteristics of the produced nonaqueous electrolytic solution secondary battery were evaluated. The evaluation results are shown in Table 1.

### (Example A-3) (Reference Example)

In the same manner as in Example A-1 except that, in the electrolytic solution in Example A-1, the content of SUC was changed to 2.0% by mass, a nonaqueous electrolytic solution was prepared and a sheet battery was produced. The gas generation amount and the discharge characteristics of the produced nonaqueous electrolytic solution secondary battery were evaluated. The evaluation results are shown in Table 1.

### (Example A-4) (Reference Example)

In the same manner as in Example A-1 except that, in the electrolytic solution in Example A-1, 0.5% by mass of maleic acid anhydride (MAL) was used as the additive in place of SUC, a nonaqueous electrolytic solution was prepared and a sheet battery was produced. The gas generation amount and the discharge characteristics of the produced nonaqueous electrolytic solution secondary battery were evaluated. The evaluation results are shown in Table 1.

### (Example A-5)

In the same manner as in Example A-1 except that in the electrolytic solution in Example A-1, 0.5% by mass of lithium difluorophosphate (MP1) was further added in addition to 0.5% by mass of SUC, a nonaqueous electrolytic solution was prepared and a sheet battery was produced. The gas generation amount and the discharge characteristics of the produced nonaqueous electrolytic solution secondary battery were evaluated. The evaluation results 76 are shown in Table 1.

### (Example A-6)

In the same manner as in Example A-1 except that in the electrolytic solution in Example A-1, 0.5% by mass of vinylene carbonate (VC) was further added in addition to 0.5% by mass of SUC, a nonaqueous electrolytic solution was prepared and a sheet battery was produced. The gas generation amount and the discharge characteristics of the produced nonaqueous electrolytic solution secondary battery were evaluated. The evaluation results are shown in Table 1.

### (Example A-7)

In the same manner as in Example A-1 except that in the electrolytic solution in Example A-1, a mixture of EC, DEC and ethyl methyl carbonate (EMC) (3/4/3 by volume) was used as the solvent in place of the mixture of EC and DEC (3/7 by volume), a nonaqueous electrolytic solution was prepared and a sheet battery was produced. The gas generation amount of the produced nonaqueous electrolytic solution secondary battery were evaluated. The evaluation results are shown in Table 1.

### (Comparative Example A-1)

In the same manner as in Example A-1 except that in the electrolytic solution in Example A-1, any additive was not mixed at all, a nonaqueous electrolytic solution was prepared and a sheet battery was produced. The gas generation amount and the discharge characteristics of the produced nonaqueous electrolytic solution secondary battery were evaluated. The evaluation results are shown in Table 1.

### (Comparative Example A-2)

In the same manner as in Example A-1 except that in the electrolytic solution in Example A-1, a mixture of EC and EMC (3/7 by volume) was used as the solvent in place of the mixture of EC and DEC (3/7 by volume), a nonaqueous electrolytic solution was prepared and a sheet battery was produced. The gas generation amount and the discharge characteristics of the produced nonaqueous electrolytic solution secondary battery were evaluated. The evaluation results are shown in Table 1.

### (Comparative Example A-3)

In the same manner as in Example A-1 except that in the electrolytic solution in Example A-1, a mixture of EC and dipropyl carbonate (DPC) (3/7 by volume) was used as the solvent in place of the mixture of EC and DEC (3/7 by volume), a nonaqueous electrolytic solution was prepared and a sheet battery was produced. The gas generation amount and the discharge characteristics of the produced nonaqueous electrolytic solution secondary battery could not be evaluated because it was impossible to perform the liquid injection.

### (Comparative Example A-4)

In the same manner as in Example A-1 except that in the electrolytic solution in Example A-1, a mixture of EC and dimethyl carbonate (DMC) (3/7 by volume) was used as the solvent in place of the mixture of EC and DEC (3/7 by volume), a nonaqueous electrolytic solution was prepared and a sheet battery was produced. The gas generation amount of the produced nonaqueous electrolytic solution secondary battery were evaluated. The evaluation results are shown in Table 1.

**[Table 1]**

| | Solvent | | Additive | | Evaluation | |
|---|---|---|---|---|---|---|
| | cyclic (vol%) | linear (vol%) | acid anhydride (wt%) | other additive (wt%) | gas generation amount (%) | 10 C discharge rate (mAh) |
| Example A-1 | EC (30) | DEC (70) | SUC (0.5) | - | 60 | 7.9 |
| Example A-2 | EC (30) | DEC (70) | SUC (1.0) | - | 66.7 | 8.7 |
| Example A-3 | EC (30) | DEC (70) | SUC (2.0) | - | 93.3 | 8.3 |
| Example A-4 | EC (30) | DEC (70) | MAL (0.5) | - | 40 | 7.4 |
| Example A-5 | EC (30) | DEC (70) | SUC (0.5) | MP1 (0.5) | 60 | 8.3 |
| Example A-6 | EC (30) | DEC (70) | SUC (0.5) | VC (0.5) | 33.3 | 7.6 |
| Example A-7 | EC (30) | DEC40 +EMC30 | SUC (0.5) | - | 80 | - |
| Comparative Example A-1 | EC (30) | DEC (70) | - | - | 100 | 7.6 |
| Comparative Example A-2 | EC (30) | EMC (70) | SUC (0.5) | - | 120 | - |
| Comparative Example A-3 | EC (30) | DPC (70) | SUC (0.5) | - | unmeasurable | |
| Comparative Example A-4 | EC (30) | DMC (70) | SUC (0.5) | - | 145 | - |

### <Test Example B>

### (Comparative Example B-1)

A negative electrode was produced in the same manner as in Example A-1, except that 98 parts by mass of graphite powder and 2 parts by mass of PVdF were mixed and water was added thereto to prepare a slurry as the negative electrode active material, in place of the lithium titanium composite oxide in Example A-1, and the resultant slurry was applied on one surface of the collector formed of cupper and dried to form the negative electrode. Using the thus-produced negative electrode along with the positive electrode and the nonaqueous electrolytic solution, a sheet battery was produced. The gas generation amount of the produced nonaqueous electrolytic solution secondary battery was evaluated. The evaluation result is shown in Table 1.

The graphite powder used as the negative electrode active material occludes and releases lithium ions at 0.005 to 0.5 V (vs. Li/Li⁺).

### (Comparative Example B-2)

In the same manner as in Comparative Example B-1 except that in the electrolytic solution in Comparative Example B-1, any additive was not mixed at all, a nonaqueous electrolytic solution was prepared and a sheet battery was produced. The gas generation amount of the produced nonaqueous electrolytic solution secondary battery was evaluated. The evaluation result is shown in Table 2.

**[Table 2]**

| | Solvent | | Additive | | Evaluation |
|---|---|---|---|---|---|
| | cyclic (vol%) | linear (vol%) | acid anhydride (wt%) | other additive (wt%) | gas generation amount (%) |
| Comparative Example B-1 | EC (30) | DEC (70) | SUC (0.5) | - | 100 |
| Comparative Example B-2 | EC (30) | DEC (70) | - | - | 100 |

### <Test Example C>

### (Example C-1)

### [Production of Negative Electrode]

As a negative electrode active material, a lithium titanium composite oxide was used, and a negative electrode comprising lithium titanium composite oxide/conductive auxiliary agent/binder at 91/4/5 (by mass) was produced according to the method shown in the description. The potential at which the lithium titanium composite oxide used here occludes and releases lithium ions is from 1.2 to 2.0 V (vs. Li/Li⁺). In all of Examples C-1 to C-4 and Comparative Examples C-1 to C-3, the same negative electrode was used.

### [Production of Positive Electrode]

As a positive electrode active material, 85% by mass of lithium nickel cobalt-containing oxide (Li(Ni_{0.8}Co_{0.15}Al_{0.05})O₂), as a conductive material, 7% by mass of acetylene black, and as a binder, 8% by mass of polyvinylidene fluoride (PVdF) were mixed in a solvent N-methylpyrrolidone using a disperser to give a slurry. This was uniformly applied on both surfaces of an aluminium foil, dried, and then pressed to give a positive electrode. In all of Examples C-1 to C-4 and Comparative Examples C-1 to C-3, the same negative electrode was used.

### [Production of Nonaqueous Electrolytic Solution]

In a dry argon atmosphere, dry LiPF₆ was dissolved in a mixed solvent of ethylene carbonate (EC) and diethyl carbonate (DEC) (3/7 by volume) in a ratio of 1 mol/L, and an additive succinic anhydride (SUC) was added thereto so that the content of the additive in the nonaqueous electrolytic solution could be 0.5% by mass, and mixed to prepare an electrolytic solution.

### [Production of Nonaqueous Electrolytic Solution Secondary Battery]

The negative electrode, a separator and the positive electrodes were laminated to produce a battery cell. The battery cell was inserted into a bag of a laminate film coated with the resin layer on both surfaces of aluminium, with the terminals of the positive electrode and the negative electrode kept penetrating therethrough. The electrolytic solution prepared in the above was injected into the bag, and then sealed up in vacuum to produce a sheet battery. For evaluation of the gas generation amount and the discharge characteristics thereof, the thus-produced nonaqueous electrolytic solution secondary battery was tested according to the storage test and the discharge 10 C rate test mentioned above. The evaluation results are shown in Table 3.

### (Example C-2) (Reference Example)

In the same manner as in Example C-1 except that, in the electrolytic solution in Example A-1, the content of SUC was changed to 3.0% by mass, a nonaqueous electrolytic solution was prepared and a sheet battery was produced. The gas generation amount of the produced nonaqueous electrolytic solution secondary battery was evaluated. The evaluation result is shown in Table 3.

### (Example C-3)

In the same manner as in Example C-1 except that in the electrolytic solution in Example C-1, a mixture of propylene carbonate (PC) and DEC (3/7 by volume) was used in place of the mixture of EC and DEC (3/7 by volume) as the solvent, a nonaqueous electrolytic solution was prepared and a sheet battery was produced. The gas generation amount of the produced nonaqueous electrolytic solution secondary battery was evaluated. The evaluation result is shown in Table 3.

### (Example C-4)

In the same manner as in Example C-1 except that in the electrolytic solution in Example C-1, a mixture of sulfolane (SLF) and DEC (3/7 by volume) was used in place of the mixture of EC and DEC (3/7 by volume) as the solvent, a nonaqueous electrolytic solution was prepared and a sheet battery was produced. The gas generation amount of the produced nonaqueous electrolytic solution secondary battery was evaluated. The evaluation result is shown in Table 3.

### (Comparative Example C-1)

In the same manner as in Example C-1 except that in the electrolytic solution in Example C-1, any additive was not mixed at all, a nonaqueous electrolytic solution was prepared and a sheet battery was produced. The gas generation amount and the discharge characteristics of the produced nonaqueous electrolytic solution secondary battery were evaluated. The evaluation results are shown in Table 3.

### (Comparative Example C-2)

In the same manner as in Comparative Example C-1 except that in the electrolytic solution in Comparative Example C-1, a mixture of EC and EMC (3/7 by volume) was used as the solvent in place of the mixture of EC and DEC (3/7 by volume), a nonaqueous electrolytic solution was prepared and a sheet battery was produced. The gas generation amount of the produced nonaqueous electrolytic solution secondary battery was evaluated. The evaluation result is shown in Table 3.

### (Comparative Example C-3)

In the same manner as in Example C-1 except that in the electrolytic solution in Example C-1, 0.5% by mass of VC was added as the additive in place of SUC, a nonaqueous electrolytic solution was prepared and a sheet battery was produced. The gas generation amount of the produced nonaqueous electrolytic solution secondary battery was evaluated. The evaluation result is shown in Table 3.

**[Table 3]**

| | Solvent | | Additive | | Evaluation | |
|---|---|---|---|---|---|---|
| | cyclic (vol%) | linear (vol%) | acid anhydride (wt%) | other additive (wt%) | gas generation amount (%) | 10 C discharge rate (mAh) |
| Example C-1 | EC (30) | DEC(70) | SUC (0.5) | - | 37.5 | 10.9 |
| Example C-2 | EC (30) | DEC (70) | SUC (3.0) | - | 52.5 | - |
| Example C-3 | PC (30) | DEC (70) | SUC (0.5) | - | 37.5 | - |
| Example C-4 | SLF (30) | DEC (70) | SUC (0.5) | - | 35 | - |
| Comparative Example C-1 | EC (30) | DEC (70) | - | - | 100 | 10.1 |
| Comparative Example C-2 | EC (30) | EMC (70) | - | - | 105 | - |
| Comparative Example C-3 | EC (30) | DEC (70) | - | VC(0.5) | 105 | - |

As shown in Examples A-1 to A-7, the lithium secondary batteries using the electrolytic solution containing both a symmetric linear carbonate DEC and an acid anhydride tended to be relieved from volume increase (gas generation) after storage with no risk of discharge capacity reduction. In case where the electrolytic solution containing the linear carbonate of EMC or DMC as the solvent in place of DEC and containing an acid anhydride was used, as in Comparative Examples A-2 and A-4, the gas generation amount increased; and in case where the electrolytic solution containing DPC in place of DEC and containing an acid anhydride, as in Comparative Example A-3, liquid injection was impossible. From these, it is known that using the electrolytic solution containing both DEC and an acid anhydride is effective in the nonaqueous electrolytic solution secondary battery of the present invention.

As shown in Reference Examples B-1 and B-2, the advantageous effects of the present invention could not be realized when the negative electrode active material is graphite, which therefore suggests that the present invention is effective when the negative electrode active material is one capable of occluding and releasing a lithium ion at a potential nobler than 1.0 V (vs. Li/Li⁺), such as a lithium titanium composite oxide or the like.

Further as shown in Examples C-1 to C-4, it is known that the advantageous effects of the present invention can be realized irrespective of the type of the positive electrode active material, further that when DEC and an acid anhydride are contained in the nonaqueous electrolytic solution, the battery can prevent gas generation irrespective of the type of the cyclic carbonate therein.

As described above, the nonaqueous electrolytic solution secondary battery containing a nonaqueous electrolytic solution of the present invention can prevent gas generation during high-temperature storage, and can improve the battery characteristics thereof. It is considered that the nonaqueous electrolytic solution secondary battery containing a nonaqueous electrolytic solution of the present invention has a high capacity retention rate and is excellent in input/output performance, and further in input/output characteristics at low temperatures even after durability tests such as a high-temperature storage test and a cycle test have been performed.

While the invention has been described in detail with reference to specific examples thereof, it will be apparent to one skilled in the art that various changes and modifications can be made therein without departing from the spirit and scope thereof.

The present application is based on a Japanese patent application filed on June 15, 2012 (Application No. 2012-136080).

### Industrial Applicability

The nonaqueous electrolytic solution secondary battery of the present invention is useful in various known applications. Specific examples include, for example, notebook-size personal computers, stylus-operated personal computers, mobile personal computers, electronic book players, portable telephones, portable facsimiles, portable copying machines, portable printers, headphone stereos, video movies, liquid-crystal televisions, handy cleaners, portable CDs, minidiscs, transceivers, electronic organizers, calculators, memory cards, portable tape recorders, radios, back-up power supplies, motors, automobiles, bikes, small motor vehicles, bicycles, illuminations, toys, gaming machines, watches, electric power tools, strobe lights, cameras, power sources for load leveling systems, natural energy storage power sources, etc.

## Claims

1. A nonaqueous electrolytic solution secondary battery comprising: a nonaqueous electrolytic solution that contains a lithium salt and a nonaqueous solvent to dissolve the lithium salt; a negative electrode capable of occluding and releasing a lithium ion; and a positive electrode, wherein:
the negative electrode contains a negative electrode active material that occludes and releases a lithium ion at a potential nobler than 1.0 V, vs. Li/Li⁺, wherein the negative electrode active material is a lithium titanium composite oxide;
**characterized in that**
the nonaqueous solvent contains diethyl carbonate; and
the nonaqueous electrolytic solution further contains an acid anhydride, wherein the content of the acid anhydride is 0.01% by mass to 0.9% by mass of the entire nonaqueous electrolytic solution, and wherein the acid anhydride is succinic anhydride.

2. The nonaqueous electrolytic solution secondary battery according to claim 1, which comprises diethyl carbonate in an amount of from 5% by volume to 80% by volume relative to the nonaqueous solvent.

3. The nonaqueous electrolytic solution secondary battery according to claim 1 or 2, wherein the nonaqueous solvent further contains at least one of a saturated cyclic carbonate and a cyclic sulfone compound.

4. The nonaqueous electrolytic solution secondary battery according to any one of claims 1 to 3, wherein the content of the acid anhydride is 0.1% by mass to 0.9% by mass of the entire nonaqueous electrolytic solution.

5. The nonaqueous electrolytic solution secondary battery according to any one of claims 1 to 4, wherein the content of the acid anhydride is 0.1% by mass to 0.8% by mass of the entire nonaqueous electrolytic solution.

6. The nonaqueous electrolytic solution secondary battery according to any one of claims 3 to 5, wherein the saturated cyclic carbonate contains at least one of ethylene carbonate and propylene carbonate.

7. The nonaqueous electrolytic solution secondary battery according to any one of claims 3 to 6, wherein the cyclic sulfone compound contains at least one of sulfolane and sulfolane derivatives.

8. The nonaqueous electrolytic solution secondary battery according to any one of claims 1 to 7, wherein the positive electrode contains an active material containing Mn.

9. Use of the nonaqueous electrolytic solution secondary battery of any one of claims 1 to 8, as a stationary battery.

## Patentansprüche

1. Eine Sekundärbatterie mit nicht-wässriger Elektrolytlösung, umfassend: eine nicht-wässrige Elektrolytlösung, die ein Lithiumsalz und ein nicht-wässriges Lösungsmittel zum Lösen des Lithiumsalzes enthält; eine negative Elektrode, die in der Lage ist, ein Lithiumion zu maskieren und freizusetzen; und eine positive Elektrode, wobei:
die negative Elektrode ein Aktivmaterial für negative Elektroden enthält, das ein Lithiumion bei einem edleren Potential als 1,0 V, gegen Li/Li⁺, maskiert und freisetzt, wobei das Aktivmaterial der negativen Elektrode ein Lithium-Titan-Verbundoxid ist;
**dadurch gekennzeichnet, dass**
das nicht-wässrige Lösungsmittel Diethylcarbonat enthält; und
die nicht-wässrige Elektrolytlösung weiter ein Säureanhydrid enthält, wobei der Gehalt des Säureanhydrids 0,01 Massen-% bis 0,9 Massen-% der gesamten nicht-wässrigen Elektrolytlösung beträgt und wobei das Säureanhydrid Bernsteinsäureanhydrid ist.

2. Die Sekundärbatterie mit nicht-wässriger Elektrolytlösung nach Anspruch 1, welche Diethylcarbonat in einer Menge von 5 Vol.-% bis 80 Vol.-%, bezogen auf das nicht-wässrige Lösungsmittel, umfasst.

3. Die Sekundärbatterie mit nicht-wässriger Elektrolytlösung nach Anspruch 1 oder 2, wobei das nicht-wässrige Lösungsmittel weiter mindestens eines aus einem gesättigten cyclischen Carbonat und einer cyclischen Sulfonverbindung enthält.

4. Die Sekundärbatterie mit nicht-wässriger Elektrolytlösung nach einem der Ansprüche 1 bis 3, wobei der Gehalt des Säureanhydrids 0,1 Massen-% bis 0,9 Massen-% der gesamten nicht-wässrigen Elektrolytlösung beträgt.

5. Die Sekundärbatterie mit nicht-wässriger Elektrolytlösung nach einem der Ansprüche 1 bis 4, wobei der Gehalt des Säureanhydrids 0,1 Massen-% bis 0,8 Massen-% der gesamten nicht-wässrigen Elektrolytlösung beträgt.

6. Die Sekundärbatterie mit nicht-wässriger Elektrolytlösung nach einem der Ansprüche 3 bis 5, wobei das gesättigte cyclische Carbonat mindestens eines aus Ethylencarbonat und Propylencarbonat enthält.

7. Die Sekundärbatterie mit nicht-wässriger Elektrolytlösung nach einem der Ansprüche 3 bis 6, wobei die cyclische Sulfonverbindung mindestens eines aus Sulfolan und Sulfolanderivaten enthält.

8. Die Sekundärbatterie mit nicht-wässriger Elektrolytlösung nach einem der Ansprüche 1 bis 7, wobei die positive Elektrode ein Mn enthaltendes Aktivmaterial enthält.

9. Verwendung der Sekundärbatterie mit nicht-wässriger Elektrolytlösung nach einem der Ansprüche 1 bis 8 als eine ortsfeste Batterie.

## Revendications

1. Pile rechargeable à solution électrolytique non aqueuse comprenant : une solution électrolytique non aqueuse qui contient un sel de lithium et un solvant non aqueux pour dissoudre le sel de lithium ; une électrode négative capable d'absorber et de libérer un ion lithium ; et une électrode positive, dans laquelle :
l'électrode négative contient un matériau actif d'électrode négative qui absorbe et libère un ion lithium à un potentiel supérieur à 1,0 V, par rapport à Li/Li⁺, le matériau actif d'électrode négative étant un oxyde composite de lithium et de titane ;
**caractérisée en ce que**
le solvant non aqueux contient du carbonate de diéthyle ; et
la solution électrolytique non aqueuse contient en outre un anhydride d'acide, la teneur en l'anhydride d'acide étant de 0,01 % en masse à 0,9 % en masse de la totalité de la solution électrolytique non aqueuse, et l'anhydride d'acide étant l'anhydride succinique.

2. Pile rechargeable à solution électrolytique non aqueuse selon la revendication 1, qui comprend du carbonate de diéthyle en une quantité de 5 % en volume à 80 % en volume par rapport au solvant non aqueux.

3. Pile rechargeable à solution électrolytique non aqueuse selon la revendication 1 ou 2, dans laquelle le solvant non aqueux contient en outre au moins l'un parmi un carbonate cyclique saturé et un composé sulfone cyclique.

4. Pile rechargeable à solution électrolytique non aqueuse selon l'une quelconque des revendications 1 à 3, dans laquelle la teneur en l'anhydride d'acide est de 0,1 % en masse à 0,9 % en masse de la totalité de la solution électrolytique non aqueuse.

5. Pile rechargeable à solution électrolytique non aqueuse selon l'une quelconque des revendications 1 à 4, dans laquelle la teneur en l'anhydride d'acide est de 0,1 % en masse à 0,8 % en masse de la totalité de la solution électrolytique non aqueuse.

6. Pile rechargeable à solution électrolytique non aqueuse selon l'une quelconque des revendications 3 à 5, dans laquelle le carbonate cyclique saturé contient au moins l'un parmi le carbonate d'éthylène et le carbonate de propylène.

7. Pile rechargeable à solution électrolytique non aqueuse selon l'une quelconque des revendications 3 à 6, dans laquelle le composé sulfone cyclique contient au moins l'un parmi le sulfolane et des dérivés de sulfolane.

8. Pile rechargeable à solution électrolytique non aqueuse selon l'une quelconque des revendications 1 à 7, dans laquelle l'électrode positive contient un matériau actif contenant du Mn.

9. Utilisation de la pile rechargeable à solution électrolytique non aqueuse selon l'une quelconque des revendications 1 à 8, en tant que batterie stationnaire.
